# EUROPEAN PATENT APPLICATION

(11) **EP 4 760 759 A1**
(43) Date of publication of application: **17.06.2026**
(21) Application number: 24941564.7
(22) Date of filing: 17.12.2024
(51) Int. Cl.: H01F 27/28

(54) **COIL MODULE AND ELECTRONIC DEVICE**

(30) Priority: 28.05.2024 CN 202410679011
(71) Applicant: HUAWEI TECHNOLOGIES CO., LTD., Shenzhen 518129 (CN)
(72) Inventor: LI, Hui, Shenzhen, Guangdong 518129 (CN); BAO, Bin, Shenzhen, Guangdong 518129 (CN); REN, Xingbo, Shenzhen, Guangdong 518129 (CN); LI, Mengen, Shenzhen, Guangdong 518129 (CN); ZHOU, Yue, Shenzhen, Guangdong 518129 (CN)
(74) Representative: Pfenning, Meinig & Partner mbB
(86) International application number: PCT/CN2024/140010
(87) International publication number: WO 2025/246296

(57) **Abstract**

This application provides a coil module and an electronic device, and relates to the field of circuit board technologies. A high-speed signal cable and a wireless charging coil are integrated into a same coil module. The coil module may include: a substrate and a metal layer formed on one side of the substrate, where the metal layer includes a thick metal region, a thin metal region, and a transition region located in a junction region between the thick metal region and the thin metal region, the wireless charging coil is disposed in the thick metal region, the high-speed signal cable is disposed in the thin metal region, a first nanocrystal and a second nanocrystal are disposed opposite to each other on two sides of the substrate, at least a part of a periphery of the wireless charging coil is covered with the first nanocrystal, the first nanocrystal extends to be above the transition region, and at least a part of the wireless charging coil is covered with the second nanocrystal. Integration can be improved, space resources can be saved, and the high-speed signal cable and the wireless charging coil are remotely deployed by using the transition region, so that quality of respective signals of the high-speed signal cable and the wireless charging coil are not affected.

## Description

This application claims priority to Chinese Patent Application No. 202410679011.0, filed with the China National Intellectual Property Administration on May 28, 2024 and entitled "COIL MODULE AND ELECTRONIC DEVICE", which is incorporated herein by reference in its entirety.

### TECHNICAL FIELD

This application relates to the field of circuit board technologies, and in particular, to a coil module that can integrate a wireless charging coil and a high-speed signal cable, and an electronic device including the coil module.

### BACKGROUND

With the development of communication technologies, some electronic devices have wireless charging functions. A wireless charging coil has a large area and is thick, and a flexible printed circuit (flexible printed circuit, FPC) with another function needs to avoid the wireless charging coil. Consequently, architecture space of the entire device becomes limited, and integration is not high.

For example, to reduce magnetic interference to a high-speed signal, an FPC with a high-speed signal function needs to be far away from an FPC having a wireless charging coil, resulting in limited architecture resources of an entire device.

### SUMMARY

This application provides a coil module and an electronic device having the coil module. A high-speed signal cable and the wireless charging coil are integrated into a same coil module, to improve integration and reduce space resources, so that quality of respective signals of the high-speed signal cable and the wireless charging coil are not affected, magnetic interference to a high-speed signal is reduced, and wireless charging efficiency is ensured.

To achieve the foregoing objectives, the following technical solutions are used in embodiments of this application.

According to a first aspect, this application provides a coil module, where a high-speed signal cable and a wireless charging coil are integrated into the coil module.

The coil module may include a substrate, a first metal layer, a first nanocrystal, and a second nanocrystal. The first metal layer and the first nanocrystal are located on a first side of the substrate, the second nanocrystal is located on a second side of the substrate, and the first side is opposite to the second side.

The first metal layer includes a first thick metal region, a first thin metal region, and a first transition region located in a junction region between the first thick metal region and the first thin metal region. The coil module further includes a first wireless charging coil and a first high-speed signal cable, where the first wireless charging coil is located in the first thick metal region, and the first high-speed signal cable is located in the first thin metal region. At the first metal layer, at least a part of a periphery of the first wireless charging coil is covered with the first nanocrystal, and the first nanocrystal extends to be above the first transition region; and a projection of the second nanocrystal on the first wireless charging coil covers at least a part of the first wireless charging coil.

For the coil module provided in this application, a wireless charging coil and a high-speed signal cable are integrated into a same module. In addition, the wireless charging coil is disposed in a thick metal region, to reduce wireless charging impedance and improve charging efficiency. The high-speed signal cable is disposed in a thin metal region, to implement impedance control and ensure quality of a high-speed signal.

A transition region is disposed in a junction region between the thick metal region having the wireless charging coil and the thin metal region having the high-speed signal cable. A distance between the wireless charging coil and the high-speed signal cable may be increased by using the transition region, so that interference from a magnetic field to a high-speed signal is reduced, and quality of the high-speed signal is ensured.

The second nanocrystal provided in this application may cover at least a part of the wireless charging coil, and the second nanocrystal is configured to gather a magnetic field, so as to improve wireless charging efficiency. The first nanocrystal may cover at least a part of the periphery of the wireless charging coil, and may extend to the transition region. In this way, the first nanocrystal may shield a magnetic field, to may shield a magnetic field, to avoid interference from the magnetic field to surrounding signals, for example, avoid interference from the magnetic field to a high-speed signal on one side of the transition region.

Therefore, in this application, the high-speed signal cable and the wireless charging coil are integrated into one module, to improve integration. In addition, mutual interference between the high-speed signal cable and the wireless charging coil is effectively suppressed, so that operating performance of the high-speed signal cable and the wireless charging coil can be ensured.

In a possible implementation, the coil module further includes a first trace, and the first trace includes at least one of a ground cable, a power cable, or a low-speed signal cable. The power cable may include a wired charging cable.

In other words, in the example of this application, the high-speed signal cable, the wireless charging coil, and the wired charging cable may be integrated into one module, to further improve integration, further reduce space resources, and release more architecture space for the entire system.

In a possible implementation, the first trace is located in the first thick metal region, the first trace is located between the first wireless charging coil and the first high-speed signal cable, and the first nanocrystal extends from the periphery of the first wireless charging coil and covers at least a part of the first trace.

In this example, the first trace is disposed in the thick metal region, and the first trace is located between the high-speed signal cable and the wireless charging coil. A distance between the high-speed signal cable and the wireless charging coil may be further increased by using the first trace, and interference from a coil magnetic field to a high-speed signal is reduced. In addition, the first nanocrystal covers at least a part of the trace. For example, if the first trace includes a wired charging cable, with the foregoing structure, an eddy current loss of the coil magnetic field in the wired charging cable can be reduced, so that wireless charging efficiency can be improved.

In the implementation structure, the first nanocrystal needs to cover only the first trace close to the wireless charging coil, so that the first nanocrystal features a small size and low costs.

In a possible implementation, the first trace is also located in the first transition region.

In the transition region, for example, when copper is used as a metal, an area of the copper located in the transition region is large, and may be referred to as a large copper sheet. For example, the first trace includes a wired charging cable, and the wired charging cable is laid out on the large copper sheet. The transition region is fully utilized, and plane space is fully utilized to make the trace wider, thereby effectively reducing wired charging impedance.

In a possible implementation, the first metal layer further includes a second thick metal region and a second transition region, and the second transition region is located in a junction region between the second thick metal region and the first thin metal region. The first trace is located in the second thick metal region. The first nanocrystal extends from the periphery of the first wireless charging coil, and covers at least a part of the first transition region and at least a part of the first thin metal region.

In this example, the first trace is disposed in another thick metal region, and a transition region is disposed in a junction region between the thick metal region and a thin metal region adjacent to the thick metal region. To reduce interference from a magnetic field to a high-speed signal, and ensure quality of the high-speed signal, the first nanocrystal may cover at least a part of the first transition region and at least a part of the first thin metal region having a high-speed signal cable.

In a possible implementation, the first nanocrystal extends from the periphery of the first wireless charging coil, and may cover at least a part of the first transition region, at least a part of the first thin metal region having the first high-speed signal cable, at least a part of the second transition region, and at least a part of the second thick metal region.

In this way, an eddy current loss can be reduced, and wireless charging efficiency can be improved.

In a possible implementation, the second thick metal region is located on a side that is of the first thin metal region and that is away from the first thick metal region.

In a possible implementation, the first trace is also located in the second transition region.

For example, the first trace includes a wired charging cable, and the wired charging cable is laid out in the second transition region of the large copper sheet. The second transition region is fully utilized, and plane space is fully utilized to make the trace wider, thereby effectively reducing wired charging impedance.

In a possible implementation, the first trace is located in the first thick metal region, and the first wireless charging coil is located between the first trace and the first high-speed signal cable. The first nanocrystal extends from the periphery of the first wireless charging coil, and covers at least a part of the first transition region, at least a part of the first thin metal region, and at least a part of the first trace.

In this embodiment, the first trace and the wireless charging coil are integrated into a same thick metal region, so that the first nanocrystal covers at least a part of the first transition region and at least a part of the first thin metal region, thereby reducing interference from a magnetic field to a high-speed signal. In addition, the first nanocrystal covers at least a part of the first trace, for example, the first trace includes a wired charging cable, so that an eddy current loss of a coil magnetic field in the wired charging cable can be reduced, and wireless charging efficiency can be improved.

In a possible implementation, the first trace is located in the first thin metal region, and the first high-speed signal cable is located between the first trace and the first wireless charging coil. The first nanocrystal extends from the periphery of the first wireless charging coil, and covers at least a part of the first transition region and at least a part of the first high-speed signal cable.

In this example, the first trace is integrated into the thin metal region.

In a possible implementation, the first trace is located in the first thin metal region, and the first trace is located between the first high-speed signal cable and the first wireless charging coil. The first nanocrystal extends from the periphery of the first wireless charging coil, and covers at least a part of the first transition region, at least a part of the first trace, and at least a part of the first high-speed signal cable.

In this example, the first trace is integrated into the thin metal region, and a distance between the high-speed signal cable and the wireless charging coil is increased by using the first trace.

In a possible implementation, the power cable of the first trace includes a wired charging cable.

In a possible implementation, the first nanocrystal includes a first effective region and a first cladding, where the first cladding is disposed around a periphery of the first effective region, and a thickness of the first effective region may be greater than a thickness of the first cladding. The first transition region includes a protrusion, and the protrusion protrudes relative to a surface of the first thick metal region. The first cladding is located above the protrusion.

In this implementation, there is a protrusion in the transition region, and a cladding of the first nanocrystal is disposed above the protrusion. In this way, when partial over-thickness of the entire coil module is not caused, an area of the first nanocrystal can be increased to the greatest extent, thereby improving a magnetic shielding effect.

In a possible implementation, a size that is of the first cladding located above the protrusion and that is in a first direction is d1, where 0.1 mm ≤ d1 ≤ 0.5 mm, and the first direction is parallel to a width direction of the first cladding.

For example, a bonding width of the first cladding above the protrusion may be 0.2 mm or 0.3 mm.

In a possible implementation, the first cladding extends to be above the first wireless charging coil.

In a possible implementation, a size that is of the first cladding located above the first wireless charging coil and that is in the first direction is d2, where 0.1 mm ≤ d2 ≤ 0.5 mm, and the first direction is parallel to the width direction of the first cladding.

For example, a bonding width of the first cladding above the first wireless charging coil may be 0.2 mm or 0.3 mm.

In a possible implementation, the second nanocrystal includes a second effective region and a second cladding, the second cladding is disposed around a periphery of the second effective region, and a thickness of the second effective region may be greater than a thickness of the second cladding. An orthographic projection that is of the first cladding located above the first wireless charging coil and that is on a reference plane is a first projection, and an orthographic projection that is of a second cladding close to one side of the first transition region and that is on the reference plane is a second projection. The first projection and the second projection overlap with each other, and the reference plane is parallel to a surface of the substrate.

In this way, the effective region of the first nanocrystal and the effective region of the second nanocrystal can extend and approach each other to the greatest extent, thereby avoiding magnetic leakage and improving a magnetic shielding effect.

In a possible implementation, a second metal layer is further disposed on the second side of the substrate, and the second metal layer includes a third thick metal region, a third thin metal region, and a third transition region located in a junction region between the third thick metal region and the third thin metal region. The third thick metal region is opposite to the first thick metal region, the third thin metal region is opposite to the first thin metal region, and the third transition region is opposite to the first transition region. The coil module further includes a second wireless charging coil and a second high-speed signal cable. The second wireless charging coil is located in the third thick metal region, and the second high-speed signal cable is located in the third thin metal region. At least a part of the second wireless charging coil is covered with the second nanocrystal.

In the example of this application, a module in which a high-speed signal cable and a wireless charging coil are integrated on both sides is provided. In some structures, the wireless charging coils on the two sides may be electrically connected via a conductive through hole passing through the substrate, and the high-speed signal cables on the two sides may be electrically connected via the conductive through hole passing through the substrate.

In a possible implementation, the coil module further includes a second trace, where the second trace includes at least one of a ground cable, a power cable, or a low-speed signal cable. The second trace is located in the third thick metal region, and the second trace is located between the second wireless charging coil and the second high-speed signal cable. The second cladding extends to be above the second trace.

In a possible implementation, a size that is of the second cladding located above the second trace and that is in the first direction is d3, where 0.1 mm ≤ d3 ≤ 0.5 mm, and the first direction is parallel to the width direction of the second cladding.

For example, a bonding width of the second cladding above the second trace may be 0.2 mm or 0.3 mm.

In a possible implementation, there is the first metal layer under the first effective region, and there is the second metal layer under the second effective region. An orthographic projection of the first effective region on the reference plane is a third projection, an orthographic projection of the second effective region on the reference plane is a fourth projection, and the third projection and the fourth projection do not overlap.

Because there is a metal layer under each of the first effective region and the second effective region, a projection of the first effective region and a projection of the second effective region do not overlap, so that partial over-thickness of the coil module is avoided.

In a possible implementation, the first side of the substrate further includes a metal-free region, where the metal-free region is located around the first wireless charging coil. An orthographic projection of the first nanocrystal in the metal-free region is a fifth projection, an orthographic projection of the second nanocrystal in the metal-free region is a sixth projection, and the fifth projection and the sixth projection overlap with each other.

In the metal-free region, projections of two nanocrystals that are located on two opposite sides overlap with each other, so that magnetic leakage can be avoided.

In a possible implementation, the first nanocrystal includes the first effective region and the first cladding, where the first cladding is disposed around the periphery of the first effective region. An overlapping width for the fifth projection and the sixth projection in a first direction is S1, where S1 ≥ 1.6 mm, and the first direction is parallel to the width direction of the first cladding.

In a possible implementation, the coil module further includes a thick capping layer, a thin capping layer, and a connection capping layer located in a junction region between the thick capping layer and the thin capping layer. The thick capping layer is formed on the first thin metal region, the thin capping layer is formed on the first thick metal region, and the connection capping layer is formed on the first transition region.

The high-speed signal cable is covered with the thick capping layer, so that a gap between cables can be filled with an insulation medium material, and a bubble at the capping layer or a short circuit between cables can be avoided. To make a surface of the coil module basically flat and prevent the thick metal region from being excessively thick, the thick metal region may be covered with the thin capping layer.

In a possible implementation, the first transition region includes an edge metal layer, the edge metal layer protrudes relative to the first thick metal region, and a connection capping layer located on the edge metal layer protrudes to form a first protruding part; the connection capping layer includes a stacked thick capping layer and a stacked thin capping layer, and a connection capping layer located on the stacked thick capping layer and the stacked thin capping layer protrudes to form a second protruding part. The first protruding part is closer to the first thick metal region than the second protruding part.

In an implementable process, when the metal layer is prepared in the transition region, thicknesses of the obtained metal layer are not uniform due to a large current density, and the metal layer protrudes relative to the metal layer in the thick metal region. In this way, after the capping layer is covered, the connection capping layer protrudes to form the first protruding part. In addition, to completely cover the transition region by the capping layer, the thick capping layer and the thin capping layer need to be stacked at some positions, so that a second protruding part is formed. In this application, the two protruding parts are disposed in a staggered manner, to avoid partial over-thickness of the coil module.

In a possible implementation, the first nanocrystal extends to be above the first protruding part.

The first nanocrystal extends to be above the first protruding part, so that when partial over-thickness of the coil module is not caused, an area of the first nanocrystal can be increased, thereby reducing an eddy current loss and suppressing magnetic interference to another signal.

In a possible implementation, the first protruding part and the second protruding part are spaced apart.

In other words, the first protruding part and the second protruding part are disposed in a staggered manner. In this way, stress concentration can be avoided. For example, when the gap region is a bending region, stress concentration can be reduced, so that use performance of the coil module can be improved.

In a possible implementation, the edge metal layer is covered with a thin capping layer.

In a possible implementation, the edge metal layer includes a first edge metal layer and a second edge metal layer, the second edge metal layer is located on a side that is of the first edge metal layer and that is away from the substrate, and the first edge metal layer protrudes toward a direction of the first thin metal region relative to the second edge metal layer.

In this implementation, the first edge metal layer and the second edge metal layer are disposed in a staggered manner, so that a height difference at a same location can be reduced, and stress concentration at a location can be alleviated.

In a possible implementation, the substrate includes a first substrate and a second substrate, the first substrate and the second substrate are disposed opposite to each other, the first substrate and the second substrate are connected through a connection layer, and the connection layer has a cavity; the first metal layer and the first nanocrystal are disposed on a side that is of the first substrate and that is away from the second substrate; and the second nanocrystal is disposed on a side that is of the second substrate and that is away from the first substrate.

The coil module in this example may be applied to a folding device, and the cavity may be used for a rotating shaft structure to pass through.

In a possible implementation, the cavity corresponds to a location of the first thin metal region.

According to a second aspect, this application provides an electronic device. The electronic device may include a processor and the coil module in any one of the foregoing implementations, and the coil module is connected to the processor.

In the electronic device provided in this application, the wireless charging coil and the high-speed signal cable are integrated into a same coil module. The wireless charging coil is disposed in a thick metal region, to reduce wireless charging impedance and improve charging efficiency. The high-speed signal cable is disposed in a thin metal region, to implement impedance control and ensure quality of a high-speed signal. In addition, a transition region is further disposed, and a distance between the wireless charging coil and the high-speed signal cable may be increased by using the transition region, to reduce interference from a magnetic field to a high-speed signal. The first nanocrystal in the electronic device may cover at least a part of the periphery of the wireless charging coil, and may extend to the transition region. In this way, the first nanocrystal can shield a magnetic field, to avoid interference from the magnetic field to surrounding signals, for example, avoid interference from the magnetic field to a high-speed signal on one side of the transition region.

In a possible implementation, the electronic device may include a bar-type electronic device, or may include a foldable electronic device.

In a possible implementation, the electronic device includes a foldable electronic device, and the foldable electronic device includes a rotating shaft structure; the substrate includes a first substrate and a second substrate, the first substrate and the second substrate are disposed opposite to each other, the first substrate and the second substrate are connected through a connection layer, the connection layer has a cavity, and the rotating shaft structure passes through the cavity; the first metal layer and the first nanocrystal are disposed on a side that is of the first substrate and that is away from the second substrate, and the second nanocrystal is disposed on a side that is of the second substrate and that is away from the first substrate.

According to a third aspect, this application provides a coil module preparation method, and the preparation method includes:
obtaining a first metal layer on a first side of a substrate, where the first metal layer includes a first thick metal region, a first thin metal region, and a first transition region located in a junction region between the first thick metal region and the first thin metal region;
etching the first metal layer, to obtain a first wireless charging coil and a first high-speed signal cable, where the first wireless charging coil is located in the first thick metal region, and the first high-speed signal cable is located in the first thin metal region;
disposing a first nanocrystal on a side that is of the first metal layer and that is away from the substrate, where at least a part of the periphery of the first wireless charging coil is covered with the first nanocrystal, and the first nanocrystal extends to the first transition region; and
disposing a second nanocrystal on another side of the substrate, where a projection of the second nanocrystal on the first wireless charging coil covers at least a part of the first wireless charging coil.

In the coil module obtained by using the preparation method, a high-speed signal cable is integrated into a thin metal region, so that impedance control can be implemented and quality of a high-speed signal can be ensured. A wireless charging coil is integrated into a thick metal region, so that wireless charging impedance can be reduced and charging efficiency can be improved. By using the nanocrystal that extends to the transition region, interference from a magnetic field to a high-speed signal can be further reduced, and quality of the high-speed signal and wireless charging efficiency can be ensured.

In a possible implementation, when the first wireless charging coil is formed in the first thick metal region, the method further includes:
forming a first trace in the first thick metal region, where the first trace is located between the first wireless charging coil and the first high-speed signal cable, and the first trace includes at least one of a ground cable, a power cable, or a low-speed signal cable. The power cable may include a wired charging cable.

By using the first trace, a distance between the wireless charging coil and the high-speed signal cable may be increased, and interference from a coil magnetic field to a high-speed signal is reduced. For example, the first trace includes a wired charging cable, and the first nanocrystal covers at least a part of the wired charging cable, so that an eddy current loss of the coil magnetic field in the wired charging cable can be reduced, and wireless charging efficiency can be improved.

In a possible implementation, the first transition region includes a metal layer, and the first trace is located at the metal layer.

In a possible implementation, after the first wireless charging coil is formed in the first thick metal region, and the first high-speed signal cable is formed in the first thin metal region, and before the first nanocrystal and the second nanocrystal are disposed, the preparation method may further include:
obtaining a thick capping layer, a thin capping layer, and a connection capping layer located in a junction region between the thick capping layer and the thin capping layer, where the thick capping layer is formed on the first thin metal region, the thin capping layer is formed on the first thick metal region, and the connection capping layer is formed on the first transition region.

The thin metal region includes a high-speed signal cable, and the high-speed signal cable is covered with a thick capping layer, so that a gap between cables can be filled with an insulation medium material, and a bubble in the capping layer or a short circuit between cables can be avoided. To make the surface of the coil module basically flat and prevent the thick metal region from being excessively thick, the thick metal region may be covered with a thin capping layer.

In a possible implementation, the first transition region includes a protrusion, the protrusion protrudes relative to the first thick metal region, the first nanocrystal includes a first effective region and a first cladding, and the first cladding is disposed around the periphery of the first effective region. When the first nanocrystal is disposed, it is included that the first cladding extends to be above the protrusion.

When there is a protrusion in the transition region, a cladding of the first nanocrystal is disposed above the protrusion, so that when partial over-thickness of the coil module is not caused, an area of the first nanocrystal can be increased, thereby reducing an eddy current loss and suppressing magnetic interference to another signal.

In a possible implementation, before the second nanocrystal is disposed, the preparation method may further include:
disposing a second metal layer on another side of the substrate, where the second metal layer includes a third thick metal region, a third thin metal region, and a third transition region located in a junction region between the third thick metal region and the third thin metal region; and
etching the second metal layer, to obtain a second wireless charging coil, a second high-speed signal cable, and a second trace, where the second trace includes at least one of a ground cable, a power cable, or a low-speed signal cable, the second wireless charging coil and the second trace are located in the third thick metal region, the second high-speed signal cable is located in the third thin metal region, and the second trace is located between the second wireless charging coil and the second high-speed signal cable.

In a possible implementation, the second nanocrystal includes a second effective region and a second cladding, and the second cladding is disposed around a periphery of the second effective region. When the second nanocrystal is disposed, it is included that the second cladding extends to be above the second trace in the third thick metal region.

### BRIEF DESCRIPTION OF DRAWINGS

FIG. 1 is a diagram of a partial structure of a coil module according to an embodiment of this application;
FIG. 2 is a diagram of a partial structure of a coil module according to an embodiment of this application;
FIG. 3 is a front view of a coil module according to an embodiment of this application;
FIG. 4 is a rear view of a coil module according to an embodiment of this application;
FIG. 5 is a side view of a coil module according to an embodiment of this application;
FIG. 6 is a diagram showing an arrangement manner for a wireless charging coil, a high-speed signal cable, and a wired charging cable in a coil module according to an embodiment of this application;
FIG. 7A is a diagram showing an arrangement manner for a wireless charging coil, a high-speed signal cable, and a wired charging cable in a coil module according to an embodiment of this application;
FIG. 7B is a diagram showing an arrangement manner for a wireless charging coil, a high-speed signal cable, and a wired charging cable in a coil module according to an embodiment of this application;
FIG. 8 is a diagram showing an arrangement manner for a wireless charging coil, a high-speed signal cable, and a wired charging cable in a coil module according to an embodiment of this application;
FIG. 9 is a diagram showing an arrangement manner for a wireless charging coil, a high-speed signal cable, and a wired charging cable in a coil module according to an embodiment of this application;
FIG. 10 is a diagram showing an arrangement manner for a wireless charging coil, a high-speed signal cable, and a wired charging cable in a coil module according to an embodiment of this application;
FIG. 11 is a diagram of a partial structure of a coil module according to an embodiment of this application;
FIG. 12 is a diagram of a partial structure of a coil module according to an embodiment of this application;
FIG. 13 is a diagram of a partial structure of a coil module according to an embodiment of this application;
FIG. 14 is a block flowchart of a coil module preparation method according to an embodiment of this application;
FIG. 15A to FIG. 15F are diagrams of corresponding structures after each step is completed in a coil module manufacturing process according to an embodiment of this application;
FIG. 16A to FIG. 16G are diagrams of corresponding structures after each step is completed in a coil module manufacturing process according to an embodiment of this application;
FIG. 17 is a diagram of a structure of a first nanocrystal according to an embodiment of this application;
FIG. 18 is an A-A sectional view of FIG. 17;
FIG. 19 is a diagram of a structure of a second nanocrystal according to an embodiment of this application;
FIG. 20 is a B-B sectional view of FIG. 19;
FIG. 21 is a front view of a coil module according to an embodiment of this application;
FIG. 22 is a C-C sectional view of FIG. 21;
FIG. 23 is a diagram of a partial structure of a coil module according to an embodiment of this application;
FIG. 24 is a rear view of a coil module according to an embodiment of this application;
FIG. 25 is a D-D sectional view of FIG. 24;
FIG. 26 is a diagram of a partial structure of a coil module according to an embodiment of this application;
FIG. 27 is a diagram of a partial structure of a coil module according to an embodiment of this application;
FIG. 28 is a diagram of a partial structure of a coil module according to an embodiment of this application; and
FIG. 29 is a diagram of a partial structure of a coil module according to an embodiment of this application.

### DESCRIPTION OF EMBODIMENTS

The following describes solutions in embodiments of this application with reference to the accompanying drawings.

Embodiments of this application provide an electronic device. The electronic device may include a terminal device, for example, a mobile phone (mobile phone), a tablet computer (pad), a smart wearable product (for example, a smartwatch or a smart band), a virtual reality (virtual reality, VR) device, augmented reality (augmented reality, AR), or an uncrewed aerial vehicle, or may be a device, for example, a base station, a television, a router, or a vehicle. A specific form of the electronic device is not especially limited in embodiments of this application.

The electronic device in the foregoing examples may have a wireless charging function and a wired charging function, and may transmit a high-speed signal.

In some examples, in a digital circuit, when a length of a transmission path for a digital signal is greater than 1/6 times of a wavelength of the transmitted signal, the signal may be considered as a high-speed signal.

Common high-speed signal interface protocols include a universal serial bus (Universal Serial Bus, USB), a mobile industry processor interface (Mobile Industry Processor Interface, MIPI), a double data rate synchronous dynamic random access memory (Double Data Rate SDRAM, DDR SDRAM), a high-speed serial computer extended bus standard (PCI Express, PCIe), a high definition multimedia interface (High Definition Multimedia Interface, HDMI), and the like.

Signal cables may include a high-speed signal cable and a low-speed signal cable, and a signal cable other than a high-speed signal cable in signal cables may be referred to as a low-speed signal cable.

As a structure and electronic components of an electronic device are increasingly integrated, for example, because a high-speed signal cable is susceptible to magnetic interference of a wireless charging coil, signal quality is affected. This poses a challenge on arrangement of the wireless charging coil and the high-speed signal cable.

Embodiments of this application provide a coil module. The coil module integrates a wireless charging coil and a high-speed signal cable, so that a wireless charging coil circuit board and a high-speed signal circuit board can be integrated into one circuit board, reducing a quantity of circuit boards, and achieving miniaturization. In addition, wireless charging efficiency can be ensured, and a risk that a high-speed signal is subject to magnetic interference of the wireless charging coil can be reduced.

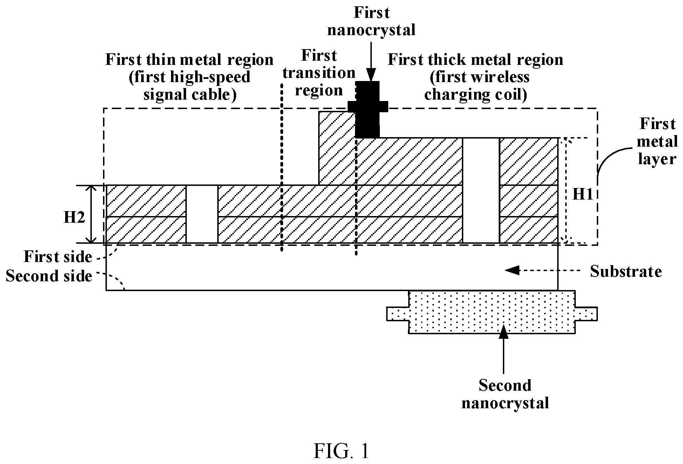

FIG. 1 is an example of a sectional view of a coil module. As shown in FIG. 1, the coil module includes a substrate, the substrate has a first side and a second side that are opposite to each other, and a first metal layer is included on the first side. The first metal layer may be one layer of metal, or may include a plurality of layers of metal that are stacked. For example, in the example in FIG. 1, the first metal layer includes a plurality of layers of metal that are stacked.

In some examples, as shown in FIG. 1, the first metal layer may be directly disposed on a surface of the substrate. Alternatively, in some other examples, another film layer structure may be disposed between the substrate and the first metal layer.

As shown in FIG. 1, the first metal layer includes a first thick metal region, a first thin metal region, and a first transition region located in a junction region between the first thick metal region and the first thin metal region. A thickness H1 of the metal layer in the first thick metal region is greater than a thickness H2 of the metal layer in the first thin metal region.

In some examples, as shown in FIG. 1, the first transition region may include the metal layer.

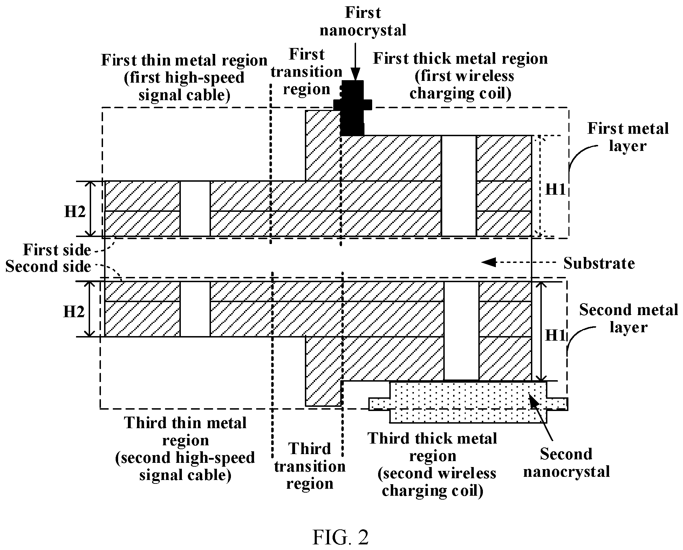

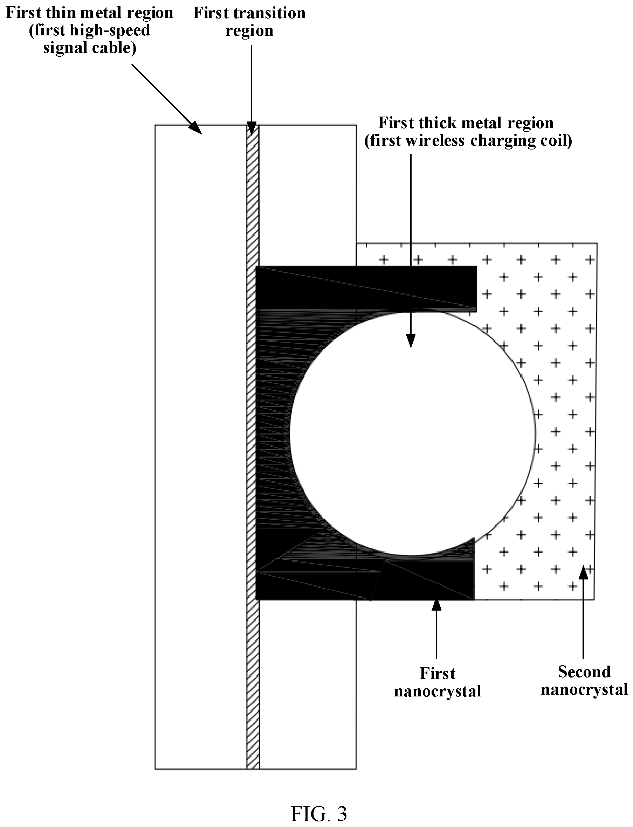

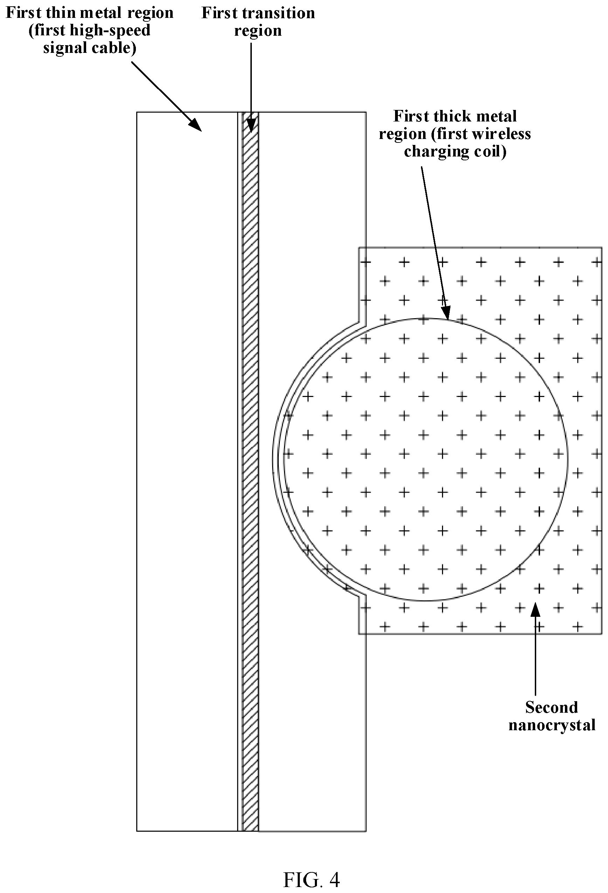

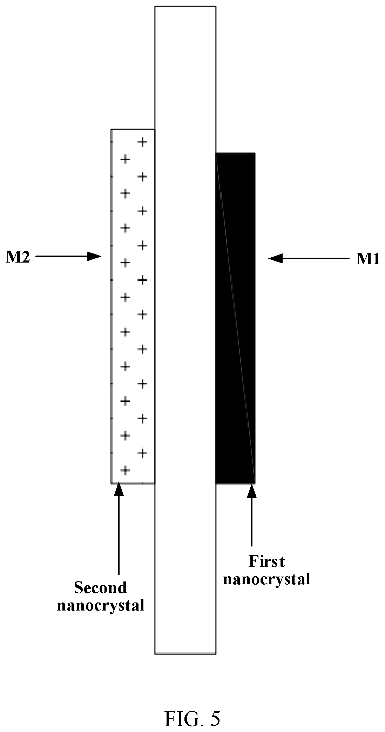

FIG. 2 is an example of a sectional view of another coil module, FIG. 3 is an example of a front view of the coil module, FIG. 4 is an example of a rear view of the coil module, and FIG. 5 is an example of a side view of the coil module. It may be understood as that FIG. 3 shows a view along an M1 direction in FIG. 5, and FIG. 4 shows a view along an M2 direction in FIG. 5.

As shown in FIG. 2, the coil module includes a substrate, a first metal layer is provided on a first side of the substrate, and a second metal layer is provided on a second side of the substrate. In other words, a metal layer is disposed on each of the two opposite sides of the substrate.

Any one of the first metal layer and the second metal layer may be one layer of metal, or may include a plurality of layers of metal that are stacked. For example, in the example in FIG. 2, any one of the first metal layer and the second metal layer includes a plurality of layers of metal that are stacked.

As shown in FIG. 2, the first metal layer includes a first thick metal region, a first thin metal region, and a first transition region located in a junction region between the first thick metal region and the first thin metal region.

A thickness H1 of the metal layer in the first thick metal region is greater than a thickness H2 of the metal layer in the first thin metal region.

The second metal layer includes a third thick metal region, a third thin metal region, and a third transition region located in a junction region between the third thick metal region and the third thin metal region.

A thickness H1 of the metal layer in the third thick metal region is greater than a thickness H2 of the metal layer in the third thin metal region.

In some examples, the third thick metal region is opposite to the first thick metal region, the third thin metal region is opposite to the first thin metal region, and the third transition region is opposite to the first transition region.

In some examples, as shown in FIG. 2, the third transition region may include the metal layer.

As shown in FIG. 1, at the first metal layer, the first thick metal region includes a first wireless charging coil, and the first thin metal region includes a first high-speed signal cable. Alternatively, as shown in FIG. 2, at the first metal layer, the first thick metal region includes a first wireless charging coil, and the first thin metal region includes a first high-speed signal cable; and at the second metal layer, the third thick metal region includes a second wireless charging coil, and the third thin metal region includes a second high-speed signal cable. In other words, in the coil module in the example of this application, a wireless charging coil is disposed in a thick metal region, a high-speed signal cable is disposed in a thin metal region, and the wireless charging coil and the high-speed signal cable are separated by a transition region.

It may be understood as that in the coil module provided in this application, a requirement of each signal for a metal layer thickness is met based on a region. For example, a high-speed signal is disposed in a thin metal region, to implement impedance control by using thin metal and improve quality of the high-speed signal. A wireless charging coil is disposed in a thick metal region, to reduce wireless charging impedance and improve wireless charging efficiency. In addition, a transition region located between the high-speed signal cable and the wireless charging coil is used to increase a distance between the high-speed signal cable and the wireless charging coil, so that interference from a magnetic field to the high-speed signal can be reduced, and quality of the high-speed signal can be improved.

In some examples, a conductive through hole may be provided on the substrate. The first wireless charging coil at the first metal layer is electrically connected to the second wireless charging coil at the second metal layer by using a first conductive through hole. The first high-speed signal cable at the first metal layer can be electrically connected to the second high-speed signal cable at the second metal layer by using a second conductive through hole.

Still refer to FIG. 1. The coil module in the example of this application may further include a first nanocrystal and a second nanocrystal. The first nanocrystal and the first metal layer are located on the first side of the substrate, the first nanocrystal is disposed on a side that is of the first metal layer and that is away from the substrate, and the second nanocrystal is located on the second side of the substrate.

As shown in FIG. 1, at the first metal layer, at least a part of a periphery of the first wireless charging coil is covered with the first nanocrystal. A projection of the second nanocrystal on the first wireless charging coil covers at least a part of the first wireless charging coil.

In the examples in FIG. 2 to FIG. 5, the coil module in the examples of this application may further include a first nanocrystal and a second nanocrystal. The first nanocrystal and the first metal layer are located on the first side of the substrate. The first nanocrystal is disposed on a side that is of the first metal layer and that is away from the substrate. The second nanocrystal and the second metal layer are located on the second side of the substrate, and the second nanocrystal is disposed on a side that is of the second metal layer and that is away from the substrate.

As shown in FIG. 3, at the first metal layer, at least a part of a periphery of a first wireless charging coil is covered with the first nanocrystal.

As shown in FIG. 4, at the second metal layer, at least a part of a second wireless charging coil is covered with the second nanocrystal. For example, the second nanocrystal may cover the entire second wireless charging coil.

For example, in an electronic device, the first nanocrystal is disposed close to a back cover of the electronic device, and the second nanocrystal is disposed close to a display of the electronic device. The second nanocrystal is used to gather a magnetic field, to improve wireless charging efficiency. The first nanocrystal may shield the magnetic field, to avoid interference from the magnetic field to surrounding signals, for example, avoid interference from the magnetic field to quality of a high-speed signal, and for another example, reduce an eddy current loss of the coil magnetic field in a wired charging cable, to improve wireless charging efficiency.

As shown in FIG. 1 and FIG. 2, the first nanocrystal in the examples of this application may extend to be above the first transition region. Because the first high-speed signal cable is located on one side of the first transition region, interference from a coil magnetic field to a high-speed signal can be suppressed by using the nanocrystal extending to be above the first transition region, thereby improving quality of the high-speed signal.

In some examples, the substrate in the coil module may be made of a flexible material, where the flexible material may be, for example, polyimide (Polyimide, PI), or polyethylene terephthalate PET. Such a coil module may also be referred to as an FPC including a wireless charging coil and a high-speed signal cable.

In this application, the wireless charging coil and the high-speed signal cable are integrated into one FPC, to save space resources and save architecture space of an entire device. In addition, the wireless charging coil and the high-speed signal can ensure respective signal quality, and interference to each other is effectively suppressed. In addition, a quantity of FPCs is reduced, reducing assembly costs.

The coil module provided in embodiments of this application may be electrically connected to a processor, and the processor is configured to process data of the coil module.

In the examples of this application, another trace may also be integrated into the coil module. For example, the trace may include at least one of a ground cable, a power cable, or a low-speed signal cable. For example, the power cable may include a wired charging cable.

In this way, the wireless charging coil, the high-speed signal cable, and another cable (for example, at least one of a ground cable, a power cable, and a low-speed signal cable) are integrated into one module, thereby further improving integration and further saving space resources.

In this application, a wired charging cable is used as an example, and the wired charging cable is integrated into the coil module. In another example, alternatively, a ground cable and a power cable (for example, a wired charging cable) may be integrated into the coil module, or a ground cable and a low-speed signal cable may be integrated into the coil module, or a ground cable, a power cable, and a low-speed signal cable may all be integrated into the coil module.

Arrangement of the wireless charging coil, the high-speed signal cable, and the wired charging cable may be implemented in a plurality of manners. The following provides several examples.

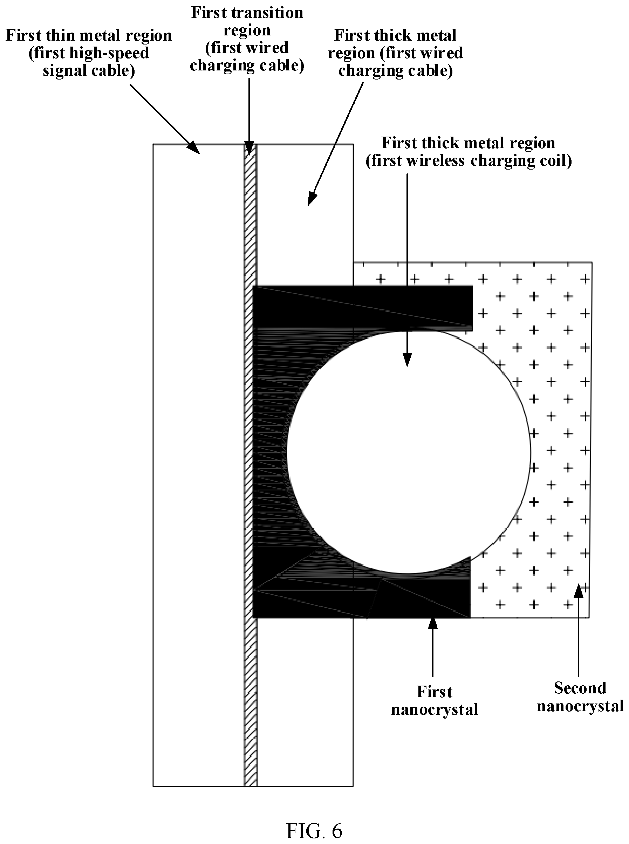

FIG. 6 shows an example of an arrangement manner for a wireless charging coil, a high-speed signal cable, and a wired charging cable. A first wired charging cable and a first wireless charging coil are located in a first thick metal region, the first wireless charging coil is farther away from a first high-speed signal cable than the first wired charging cable, and the first high-speed signal cable is located in a first thin metal region.

In other words, the thick metal region may be used to arrange the wired charging cable and the wireless charging coil, and the wired charging cable is located between the wireless charging coil and the high-speed signal cable. In this way, the wired charging cable may be used to further increase a distance between the wireless charging coil and the high-speed signal cable, to improve quality of a high-speed signal.

The wired charging cable is integrated into the thick metal region, to effectively reduce wired charging impedance, and improve wired charging efficiency.

A first nanocrystal extends from a periphery of the first wireless charging coil, and may cover at least a part of the first wired charging cable, and then extends to a first transition region. In some examples, the first nanocrystal may cover the entire first wired charging cable.

Because the first nanocrystal covers at least a part of the first wired charging cable, an eddy current loss of a coil magnetic field in the first wired charging cable can be reduced, and wireless charging efficiency can be improved.

In some examples, as shown in FIG. 6, the first wired charging cable is also located in the first transition region. Space of the transition region is fully used, and copper thicknesses of the transition region are not uniform. In this case, it is inappropriate to lay out a network that has a high requirement for stability of a line width and a copper thickness and requires signal integrity, for example, a high-speed signal network. However, a network, for example, a wired charging cable, that has a low requirement for stability of a line width and a copper thickness may be laid out. In this way, an area of a copper sheet for wired charging can be increased to the greatest extent, and plane space of the transition region is fully used to make a trace wider, to effectively reduce wired charging impedance.

In the example in FIG. 6, the first nanocrystal covers the first wired charging cable that is close to the first wireless charging coil, and the first nanocrystal features a small size and low manufacturing costs.

In some examples, a line width of the first wired charging cable located in the first thick metal region may be different from or the same as a line width of the first wired charging cable located in the first transition region. A line thickness of the first wired charging cable located in the first thick metal region may be different from or the same as a line thickness of the first wired charging cable located in the first transition region.

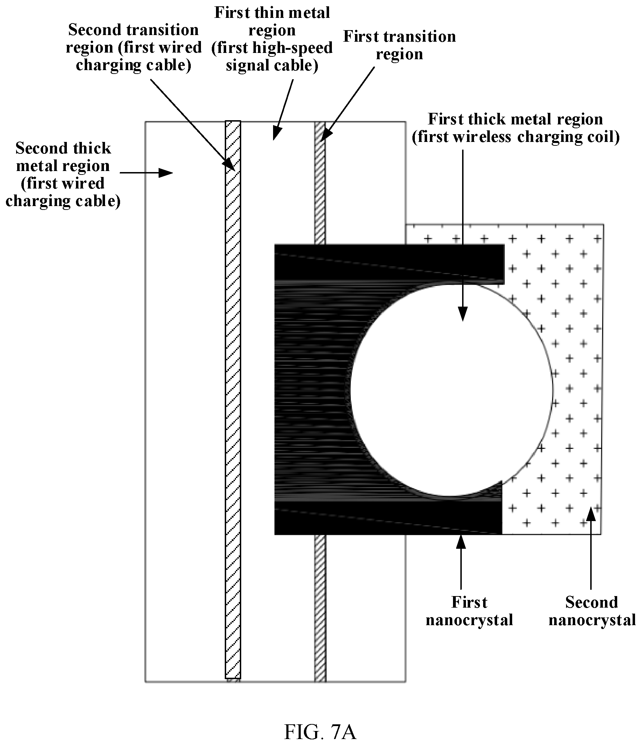

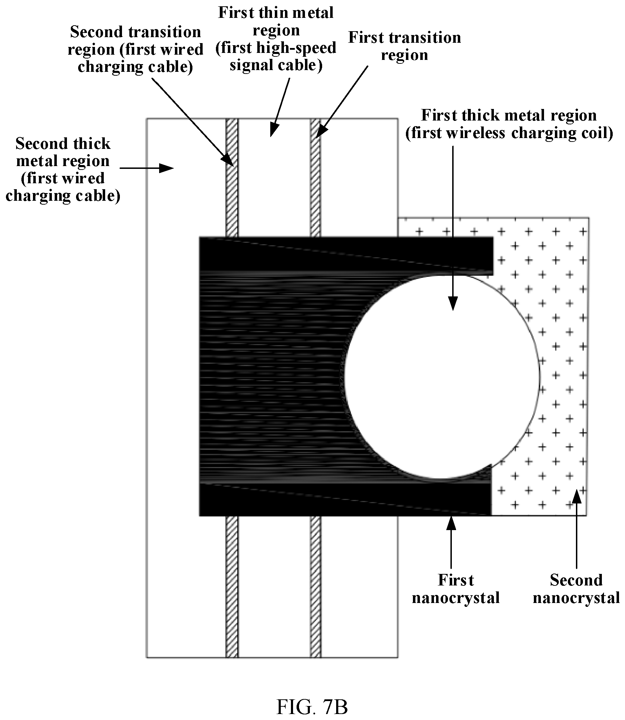

FIG. 7A and FIG. 7B show examples of another arrangement manner for a wireless charging coil, a high-speed signal cable, and a wired charging cable. A first metal layer includes a first thick metal region, a first thin metal region, and a first transition region located in a junction region between the first thick metal region and the first thin metal region. In addition, the first metal layer further includes a second thick metal region and a second transition region, and the second transition region is located in a junction region between the second thick metal region and the first thin metal region.

Alternatively, a second metal layer includes a fourth thick metal region and a fifth transition region, and the fifth transition region is located in a junction region between the fourth thick metal region and a third thin metal region. For example, the fourth thick metal region is located on a side that is of the third thin metal region and that is away from a third thick metal region.

A first wireless charging coil is located in the first thick metal region, a first high-speed signal cable is located in the first thin metal region, and a first wired charging cable is located in the second thick metal region. In other words, the wired charging cable is arranged in another thick metal region, and the second thick metal region and the first thin metal region are separated from each other by the second transition region.

In some examples, as shown in FIG. 7A and FIG. 7B, the first wired charging cable may also be located in the second transition region.

To ensure quality of a high-speed signal, as shown in FIG. 7A, a first nanocrystal extends from a periphery of the first wireless charging coil, and may cover at least a part of the first transition region and at least a part of the first thin metal region including the first high-speed signal cable.

In some other examples, as shown in FIG. 7B, a first nanocrystal extends from a periphery of the first wireless charging coil, and may cover at least a part of the first transition region, at least a part of the first thin metal region including the first high-speed signal cable, at least a part of the second transition region, and at least a part of the second thick metal region. In this way, an eddy current loss of a coil magnetic field in the wired charging cable can be reduced, thereby improving wireless charging efficiency.

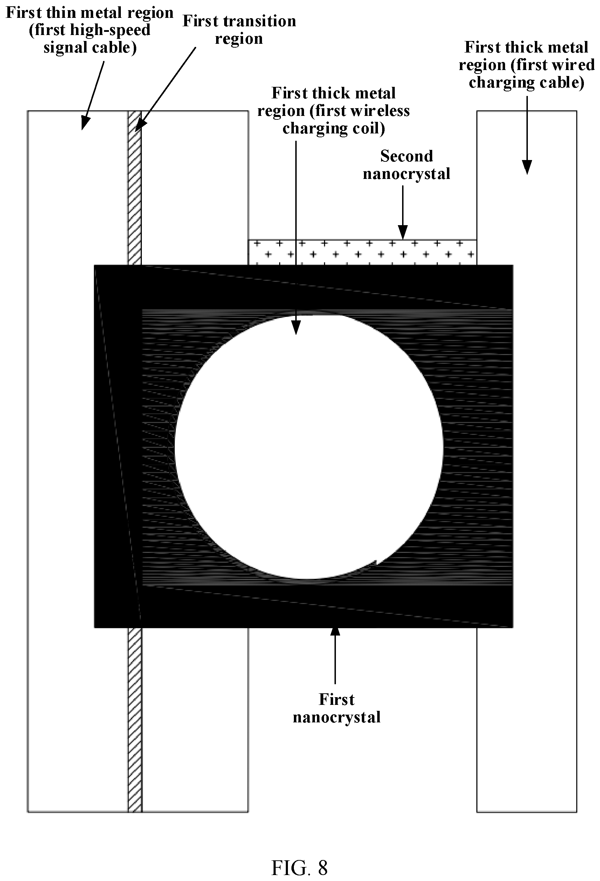

FIG. 8 shows an example of another arrangement manner for a wireless charging coil, a high-speed signal cable, and a wired charging cable. A first wired charging cable and a first wireless charging coil are located in a first thick metal region, a first high-speed signal cable is located in a first thin metal region, and the first wired charging cable is farther away from the first high-speed signal cable than the first wireless charging coil. It may be understood as that the first wireless charging coil is located between the first wired charging cable and the first high-speed signal cable.

In this example, the wireless charging coil and the wired charging cable are integrated into the same thick metal region, so that the high-speed signal cable and the wired charging cable are located on two sides of the wireless charging coil.

In the example in FIG. 8, a first nanocrystal extends from a periphery of the first wireless charging coil, and may cover at least a part of a first transition region and at least a part of the first thin metal region. In this way, interference from a coil magnetic field to a high-speed signal can be reduced, and quality of the high-speed signal can be ensured.

As shown in FIG. 8, the first nanocrystal extends from the periphery of the first wireless charging coil, and may further cover at least a part of the first wired charging cable, to reduce an eddy current loss of the coil magnetic field in the nearby wired charging cable.

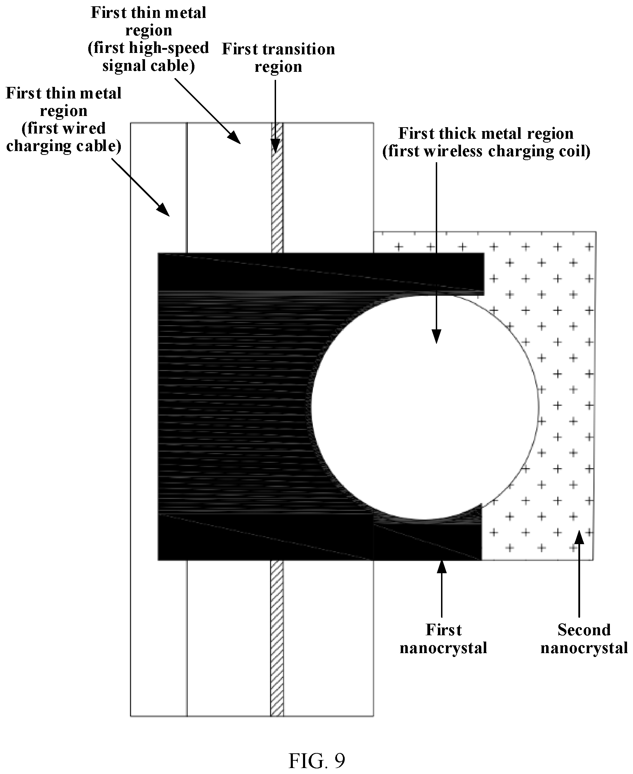

FIG. 9 shows an example of still another arrangement manner for a wireless charging coil, a high-speed signal cable, and a wired charging cable. A first wireless charging coil is located in a first thick metal region, a first high-speed signal cable and a first wired charging cable are located in a first thin metal region, and the first wired charging cable is farther away from the first wireless charging coil than the first high-speed signal cable. In other words, the first high-speed signal cable is located between the first wired charging cable and the first wireless charging coil.

The high-speed signal cable and the wired charging cable are integrated into the same thin metal region. The high-speed signal cable is located between the wireless charging coil and the wired charging cable.

In this example, a first nanocrystal extends from a periphery of the first wireless charging coil, and may cover at least a part of a first transition region, at least a part of the first high-speed signal cable, and at least a part of the first wired charging cable. In this way, interference from a magnetic field to a high-speed signal can be reduced, and quality of the high-speed signal can be ensured. In addition, an eddy current loss in a copper sheet for wired charging can be reduced, and wireless charging efficiency can be improved.

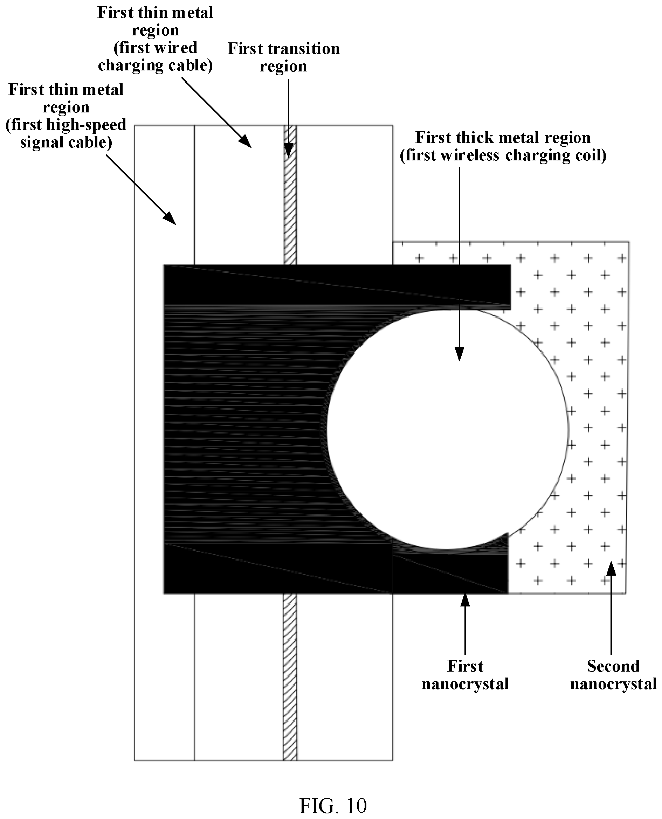

FIG. 10 shows an example of yet another arrangement manner for a wireless charging coil, a high-speed signal cable, and a wired charging cable. A first wireless charging coil is located in a first thick metal region, a first high-speed signal cable and a first wired charging cable are located in a first thin metal region, and the first high-speed signal cable is farther away from the first wireless charging coil than the first wired charging cable. In other words, the first wired charging cable is located between the first high-speed signal cable and the first wireless charging coil.

The high-speed signal cable and the wired charging cable are integrated into the same thin metal region. The wired charging cable is located between the high-speed signal cable and the wireless charging coil.

In this example, a first nanocrystal extends from a periphery of the first wireless charging coil, and may cover at least a part of a first transition region, at least a part of the first wired charging cable, and at least a part of the first high-speed signal cable. In this way, interference from a magnetic field to a high-speed signal can be reduced, and quality of the high-speed signal can be ensured. In addition, an eddy current loss in a copper sheet for wired charging can be reduced, and wireless charging efficiency can be improved.

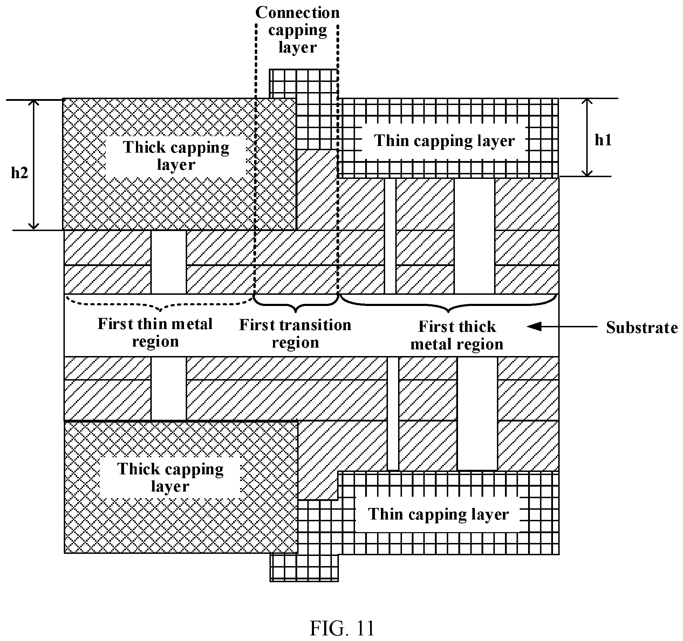

For the coil module provided in this application, as shown in FIG. 11, the coil module may further include a thick capping layer, a thin capping layer, and a connection capping layer, and the connection capping layer is located in a junction region between the thick capping layer and the thin capping layer. The thick capping layer is formed in a first thin metal region, the thin capping layer is formed in a first thick metal region, and the connection capping layer is formed in a first transition region.

A thickness h2 of the thick capping layer is greater than a thickness h1 of the thin capping layer. For example, the thickness h2 of the thick capping layer may be greater than or equal to 0.7 times of a thickness of a metal layer in a thin metal region.

For optional materials, there may be an insulating base material and an adhesive for the thick capping layer, the thin capping layer, and the connection capping layer, and the insulating base material may be polyimide PI or polyethylene terephthalate PET.

The capping layers may be used to avoid contamination, mask solder, and be filled with a circuit to avoid short circuits between signals.

In the example of this application, the high-speed signal cable is disposed in the thin metal region, and the high-speed signal cable may be covered with the thick capping layer shown in FIG. 11.

As shown in FIG. 11, the first thick metal region including a first wireless charging coil may be covered with the thin capping layer, so that a thickness of the entire coil module in the thick metal region is reduced, and the coil module FPC is not excessively thick in the thick metal region. In this way, a surface of the entire coil module can be flat.

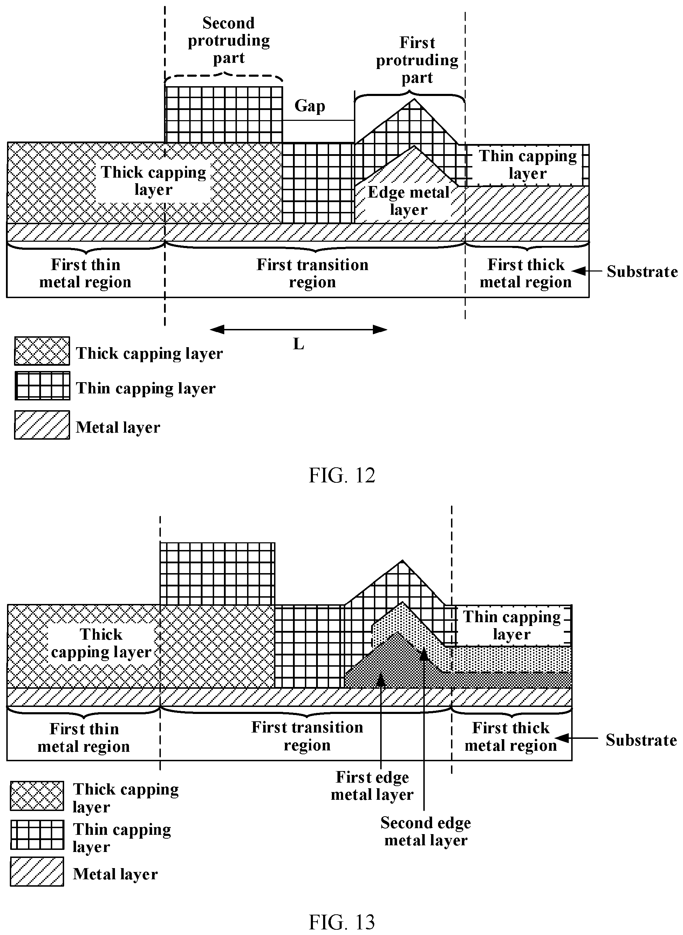

FIG. 12 shows an example of a sectional view of a structure that is of a coil module and that can be implemented, and shows a part of the structure of the coil module. FIG. 12 shows a first thick metal region, a first thin metal region, and a first transition region located in a junction region between the first thick metal region and the first thin metal region, and also shows a thick capping layer, a thin capping layer, and a connection capping layer.

In FIG. 12, in the first transition region, there is a metal layer at a location close to the first thick metal region.

In an implementable process, the metal layer may be manufactured from the first transition region to the first thick metal region. For example, the metal layer is prepared by using an electroplating process. Due to an edge effect and high current density, when metal is electroplated in the first transition region, a protruding metal layer shown in FIG. 12 may be prepared in the first transition region. The metal layer may be referred to as an edge metal layer. A surface of the edge metal layer protrudes relative to a surface of the thick metal region, so that the connection capping layer located on the edge metal layer protrudes to form a first protruding part.

In some structures that can be implemented, a width of the first transition region shown in the example in FIG. 12 may be 0.5 mm to 4 mm, and a width of the edge metal layer may be 0.2 mm to 2 mm.

The width of the first transition region and the width of the edge metal layer may be understood as the following: The first thin metal region, the first transition region, and the first thick metal region are arranged along a first direction, and the width of the first transition region and the width of the edge metal layer are both sizes along the first direction. As shown in FIG. 12, the first thin metal region, the first transition region, and the first thick metal region are arranged along an L direction, and the width of the first transition region and the width of the edge metal layer are sizes along the L direction.

In some manufacturing processes, when the first thin metal region is covered with the thick capping layer, the first transition region may be covered with the thick capping layer, and when the first thick metal region is covered with the thin capping layer, the first transition region may be covered with the thin capping layer.

As shown in FIG. 12, to enable the first transition region to be completely covered with the capping layer, the thick capping layer and the thin capping layer may be stacked at some locations of the first transition region, so as to form a second protruding part that is formed by stacking the thick capping layer and the thin capping layer and that is shown in FIG. 12. In this way, as shown in FIG. 12, the first protruding part and the second protruding part may be formed at locations that are on a surface of the coil module and that correspond to the first transition region.

In some examples, a width of the second protruding part may be 0.2 mm to 1.5 mm. The width of the second protruding part in the examples is a size along the L direction.

To avoid a phenomenon of partial over-thickness of the entire coil module, in some examples, as shown in FIG. 12, the first protruding part and the second protruding part are spaced apart, which may be understood as that there is a gap between the first protruding part and the second protruding part. In this way, partial over-thickness of the entire coil module is not caused, and stress concentration is avoided, thereby improving bending performance of the coil module.

In some structures that can be implemented, a width of the gap between the first protruding part and the second protruding part may be 0.1 mm to 1.5 mm. The width of the gap in this example is a size along the L direction.

Still refer to FIG. 12. In some implementations, the first protruding part is closer to the first thick metal region than the second protruding part.

In some structures, as shown in FIG. 12, a surface of the second protruding part protrudes more than a surface of the first protruding part. Alternatively, a surface of the first protruding part protrudes more than a surface of the second protruding part.

As shown in FIG. 12 and FIG. 13, the edge metal layer includes a first edge metal layer and a second edge metal layer that are stacked, the second edge metal layer is located on a side that is of the first edge metal layer and that is away from a substrate, and the first edge metal layer protrudes toward a direction of the first thin metal region relative to the second edge metal layer.

It may be understood as that the second edge metal layer recesses, relative to the first edge metal layer, toward the thick metal region along a direction along which the first edge metal layer and the second edge metal layer are stacked, that is, a thickness direction of the coil module. In this way, a height difference at a same location can be reduced, and stress concentration at a specific location is alleviated.

FIG. 12 and FIG. 13 show examples of an implementation in which a thick capping layer, a thin capping layer, and a connection capping layer are disposed on a first metal layer on one side of a substrate. In some examples, a thick capping layer, a thin capping layer, and a connection capping layer may also be disposed, with reference to the examples in FIG. 12 and FIG. 13, on a second metal layer located on another side of the substrate.

In the foregoing example, a first trace may also be disposed in a region in which the first wired charging cable is disposed. For example, the first trace may include at least one of a ground cable, a power cable, or a low-speed signal cable.

The following provides an example of a coil module preparation method. A coil module prepared by using the method can ensure wireless charging efficiency and can reduce a risk that a high-speed signal is subject to magnetic interference of a wireless charging coil.

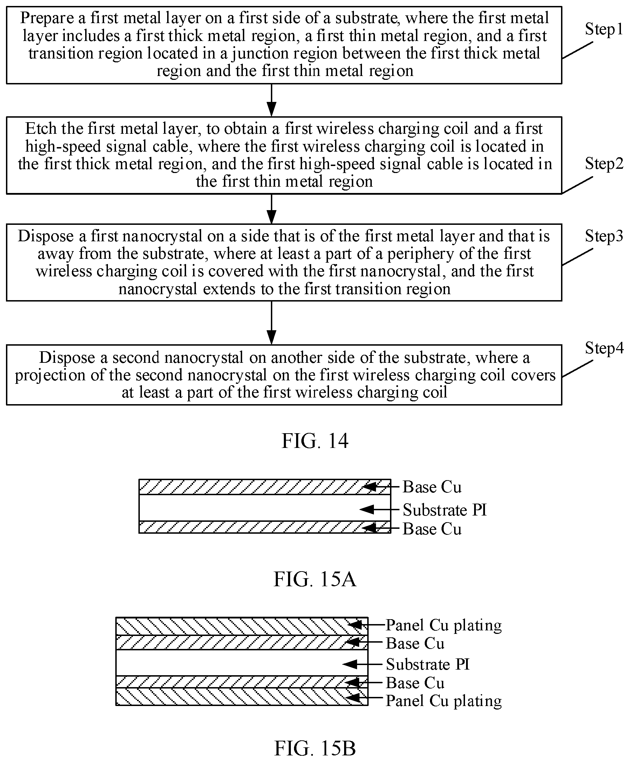

FIG. 14 is a process block diagram of a coil module preparation method according to an embodiment of this application. The steps are as follows.

Step 1: Prepare a first metal layer on a first side of a substrate, where the first metal layer includes a first thick metal region, a first thin metal region, and a first transition region located in a junction region between the first thick metal region and the first thin metal region.

Step 2: Etch the first metal layer, to obtain a first wireless charging coil and a first high-speed signal cable, where that the first wireless charging coil is located in the first thick metal region includes that the first high-speed signal cable is located in the first thin metal region.

Step 3: Dispose a first nanocrystal on a side that is of the first metal layer and that is away from the substrate, where at least a part of a periphery of the first wireless charging coil is covered with the first nanocrystal, and the first nanocrystal extends to the first transition region.

Step 4: Dispose a second nanocrystal on another side of the substrate, where a projection of the second nanocrystal on the first wireless charging coil covers at least a part of the first wireless charging coil.

In some processes, step 3 and step 4 may be interchanged, or may be performed at the same time. For example, the second nanocrystal may be disposed first, and then the first nanocrystal is disposed; or the first nanocrystal and the second nanocrystal are disposed at the same time.

In a possible implementation, when the first wireless charging coil is formed in the first thick metal region, the method further includes:
forming a first trace in the first thick metal region, where the first trace is located between the first wireless charging coil and the first high-speed signal cable, and the first trace includes at least one of a ground cable, a power cable, or a low-speed signal cable.

In some structures, the first transition region includes a metal layer, and the first trace is located at the metal layer.

In a possible implementation, before the second nanocrystal is disposed, the preparation method may further include:
disposing a second metal layer on another side of the substrate, where the second metal layer includes a third thick metal region, a third thin metal region, and a third transition region located in a junction region between the third thick metal region and the third thin metal region; and
etching the second metal layer, to obtain a second wireless charging coil, a second high-speed signal cable, and a second trace, where the second wireless charging coil and a second wired charging cable are located in the third thick metal region, the second high-speed signal cable is located in the third thin metal region, the second trace is located between the second wireless charging coil and the second high-speed signal cable, and the second trace includes at least one of a ground cable, a power cable, or a low-speed signal cable.

In a possible implementation, the second nanocrystal includes a second effective region and a second cladding, and the second cladding is disposed around a periphery of the second effective region. When the second nanocrystal is disposed, it is included that the second cladding extends to be above the second trace in the third thick metal region.

In a possible implementation, the first transition region includes a protrusion, the protrusion protrudes relative to the first thick metal region, the first nanocrystal includes a first effective region and a first cladding, and the first cladding is disposed around a periphery of the first effective region. When the first nanocrystal is disposed, it is included that the first cladding extends to be above the protrusion.

The following provides detailed descriptions by using a process step in which the substrate includes the first metal layer and the second metal layer as an example. The following implementations may be included.

FIG. 15A to FIG. 15F show one implementation, and FIG. 15A to FIG. 15F are diagrams of corresponding process structures after each process step is completed.

As shown in FIG. 15A, a flexible copper clad laminate (flexible copper clad laminate, FCCL) is obtained, where the flexible copper clad laminate may be double-sided. For example, as shown in FIG. 15A, the double-sided flexible copper clad laminate includes a substrate and base materials disposed on two sides of the substrate. The substrate may be made of polyimide (Polyimide, PI), and the base material may be base Cu.

For example, a thickness of base Cu on each side may be 12 µm.

As shown in FIG. 15B, full plating is performed on the base materials by using metal. For example, panel Cu plating is performed, so that a Cu thickness of the entire laminate is increased.

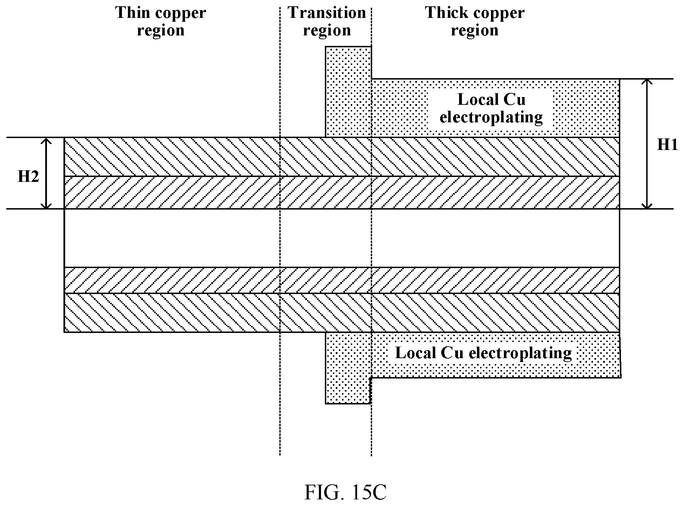

As shown in FIG. 15C, local Cu electroplating is performed on a transition region and a region used to form a wireless charging coil. In this way, a thin copper region with a thin copper layer, a thick copper region with a thick copper layer, and a transition region located between the thin copper region and the thick copper region may be formed.

In some processes, local Cu electroplating may be performed from the transition region shown in FIG. 15C to the thick copper region. Due to an edge effect and high current density, when Cu electroplating is performed on the transition region, a protruding Cu layer shown in FIG. 15C may be prepared in the transition region.

In some implementable processes, a copper thickness H1 of the thick copper region shown in FIG. 15C is 35 µm to 65 µm, and a copper thickness H2 of the thin copper region is 12 µm to 30 µm.

Because impedance control is required for a high-speed signal cable, a copper thickness on a single side may be less than or equal to 30 µm. If the copper thickness on the single side is greater than 30 µm, impedance is small. To ensure wireless charging power, the copper thickness on the single side is at least 35 µm. In this application, different requirements of two types of signals for copper thicknesses may be achieved by using a local electroplating technology.

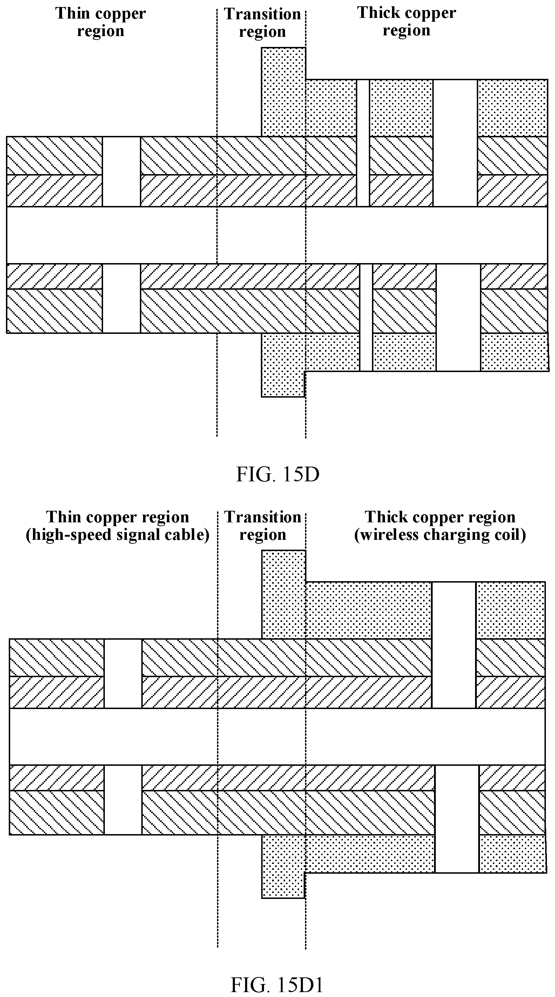

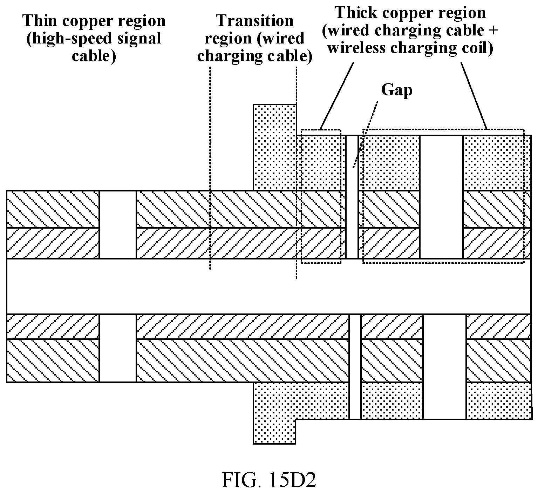

As shown in FIG. 15D, a wireless charging coil is obtained by etching the thick copper region, and a high-speed signal cable is obtained by etching the thin copper region.

In some examples, as shown in FIG. 15D1, the thick copper region includes the wireless charging coil, and the thin copper region includes the high-speed signal cable.

In some other examples, as shown in FIG. 15D2, the thick copper region includes the wireless charging coil and a wired charging cable, the transition region includes the wired charging cable, and the thin copper region includes the high-speed signal cable.

As shown in FIG. 15D2, for the wired charging cable and the wireless charging coil, a gap may be provided between the wired charging cable and the wireless charging coil. In some examples, the gap between the wired charging cable and the wireless charging coil may be 0.1 mm to 1 mm.

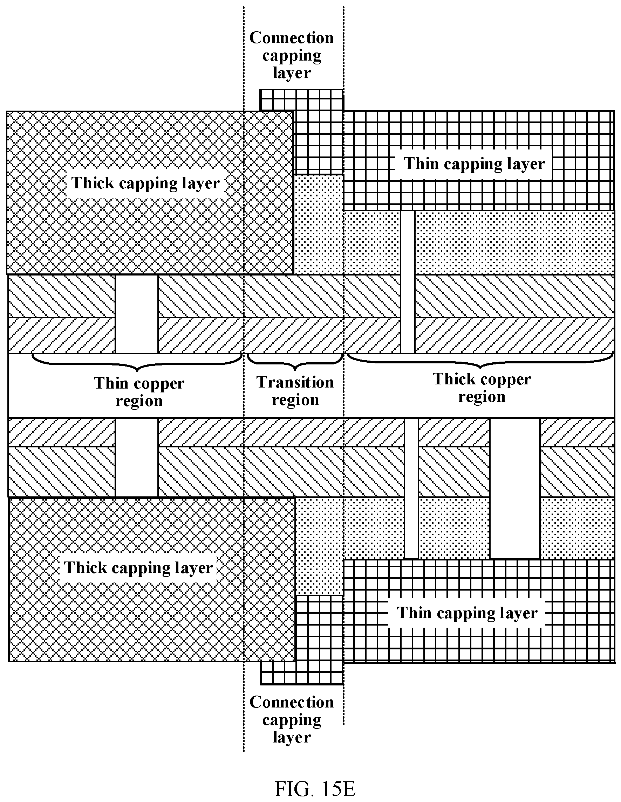

As shown in FIG. 15E, a thick capping layer is disposed on the thin copper region, a thin capping layer is disposed on the thick copper region, and a connection capping layer is disposed on the transition region.

In a process, when the thin copper region is covered with the thick capping layer, the transition region may be covered with the thick capping layer, and when the thick copper region is covered with the thin capping layer, the transition region may be covered with the thin capping layer.

To enable the transition region to be completely covered with the capping layer, the thick capping layer and the thin capping layer may be stacked at some locations of the transition region. For example, in FIG. 15E, at some locations of the transition region, the thin capping layer is stacked on the thick capping layer. Alternatively, in some other examples, the thick capping layer is stacked on the thin capping layer.

For example, a thick capping layer with a total thickness of about 25 µm to 50 µm may be bonded to the thin copper region, and a thin capping layer with a total thickness of about 10 µm to 25 µm may be bonded to the thick copper region, to reduce a thickness of the thick copper region, so that a surface of a coil module is flat.

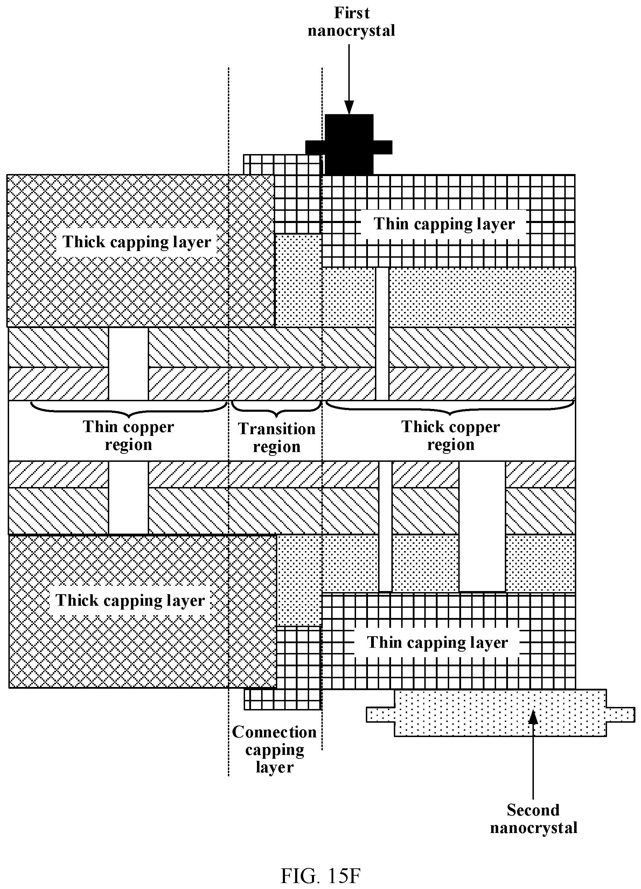

As shown in FIG. 15F, a first nanocrystal and a second nanocrystal are disposed, at least a part of a periphery of the wireless charging coil is covered with the first nanocrystal, and the first nanocrystal extends to be above the transition region. At least a part of the wireless charging coil is covered with the second nanocrystal.

In this way, the first nanocrystal may shield a magnetic field, to avoid interference from the magnetic field to surrounding signals, for example, avoid interference from the magnetic field to a high-speed signal located on one side of the transition region. The second nanocrystal is used to gather a magnetic field, to improve wireless charging efficiency.

The coil module prepared by using FIG. 15A to FIG. 15F may be applied to a bar-type electronic device, for example, a bar-type mobile phone or a bar-type tablet computer.

The following Table 1 shows an embodiment provided in this application. This embodiment reflects materials and thicknesses that are used for each process step shown in FIG. 15A to FIG. 15F.

**Table 1**

| Film layer | Material of each film layer | Thick copper region | Transition region | Thin copper region |
|---|---|---|---|---|
| | | Thickness for reference (µm) | Thickness for reference (µm) | Thickness for reference (µm) |
| Thin capping layer | PI (polyimide) | 7.5-12.5 | 7.5-12.5 | |
| | AD (adhesive) | 5-15 | 5-15 | |
| Thick capping layer | PI (polyimide) | | 7.5-12.5 | 7.5-12.5 |
| | AD (adhesive) | | 15-33 | 15-33 |
| Local electroplating | Cu (copper-plated) | 3-35 | 3-35 | |
| Panel electroplating | Cu (copper-plated) | 3-20 | 3-20 | 3-20 |
| Flexible copper clad laminate | Cu (base copper) | 12-24 | 12-24 | 12-24 |
| | PI (polyimide) | 12.5-50 | 12.5-50 | 12.5-50 |
| | Cu (base copper) | 12-24 | 12-24 | 12-24 |
| Panel electroplating | Cu (copper-plated) | 3-20 | 3-20 | 3-20 |
| Local electroplating | Cu (copper-plated) | 3-35 | 3-35 | |
| Thick capping layer | PI (polyimide) | | 7.5-12.5 | 7.5-12.5 |
| | AD (adhesive) | | 15-33 | 15-33 |
| Thin capping layer | PI (polyimide) | 7.5-12.5 | 7.5-12.5 | |
| | AD (adhesive) | 5-15 | 5-15 | |

Refer to the foregoing Table 1. Table 1 shows that a thin copper region, a thick copper region, a transition region, a thin capping layer, and a thick capping layer are separately prepared on two opposite sides of the flexible copper clad laminate. Structures of the two sides are disposed symmetrically.

The flexible copper clad laminate in the example of this application is described by using an adhesiveless copper clad laminate as an example. The flexible copper clad laminate as an actual product may alternatively be an adhesive-backed copper clad laminate. The adhesive-backed copper clad laminate includes a metal foil, an adhesive, and an insulating base film that are stacked in sequence. The adhesiveless copper clad laminate includes a metal foil and an insulating base film that are stacked. In another example, the flexible copper clad laminate may alternatively be of another structure.

In the example of this application, as shown in Table 1, materials of the thin capping layer and the thick capping layer each includes polyimide PI and an adhesive (adhesive, AD). In this application, a thickness of a capping layer may be increased by increasing a thickness of the adhesive. For example, for the thin capping layer, a thickness of the adhesive may be 5-15 µm, and for the thick capping layer, a thickness of the adhesive may be 15-33 µm.

When the thick capping layer is disposed on the thin copper region, the thick capping layer may be disposed for the transition region, and when the thin capping layer is disposed on the thick copper region, the thin capping layer may be disposed on the transition region. At some locations of the transition region, the thick capping layer and the thin capping layer are stacked.

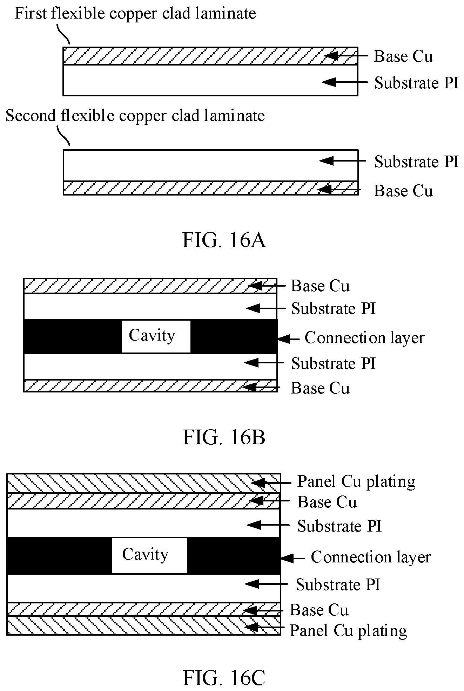

For the process steps shown in FIG. 14, FIG. 16A to FIG. 16G show another implementation, and FIG. 16A to FIG. 16G are diagrams of corresponding process structures after each process step is completed.

As shown in FIG. 16A, a first flexible copper clad laminate and a second flexible copper clad laminate are obtained.

The first flexible copper clad laminate and the second flexible copper clad laminate in the example of this application may be adhesive-backed copper clad laminates, or may be adhesiveless copper clad laminates. For example, FIG. 16A shows an example of an adhesiveless copper clad laminate.

The first flexible copper clad laminate and the second flexible copper clad laminate may be single-sided flexible copper clad laminates. For example, as shown in FIG. 16A, the single-sided flexible copper clad laminate includes a substrate and a base material disposed on one side of the substrate. The substrate may be made of polyimide (Polyimide, PI), and the base material may be base Cu.

As shown in FIG. 16B, the first flexible copper clad laminate and the second flexible copper clad laminate are connected through a connection layer. For example, a substrate of a base material of the first flexible copper clad laminate is connected to a substrate of a base material of the second flexible copper clad laminate through the connection layer. For example, the connection layer may be an adhesive layer, for example, a polymer insulation adhesive (bonding sheet) is used.

If a coil module in the example of this application is applied to a foldable electronic device, for example, a foldable mobile phone, as shown in FIG. 16B, a cavity may be provided inside the connection layer. The cavity may be provided in a region that is passed through by a rotating shaft structure, to improve bending performance at the region and facilitate the rotating shaft structure in passing through the region.

As shown in FIG. 16C, full plating is performed on the base materials by using metal. For example, panel Cu plating is performed, so that a Cu thickness of the entire laminate is increased.

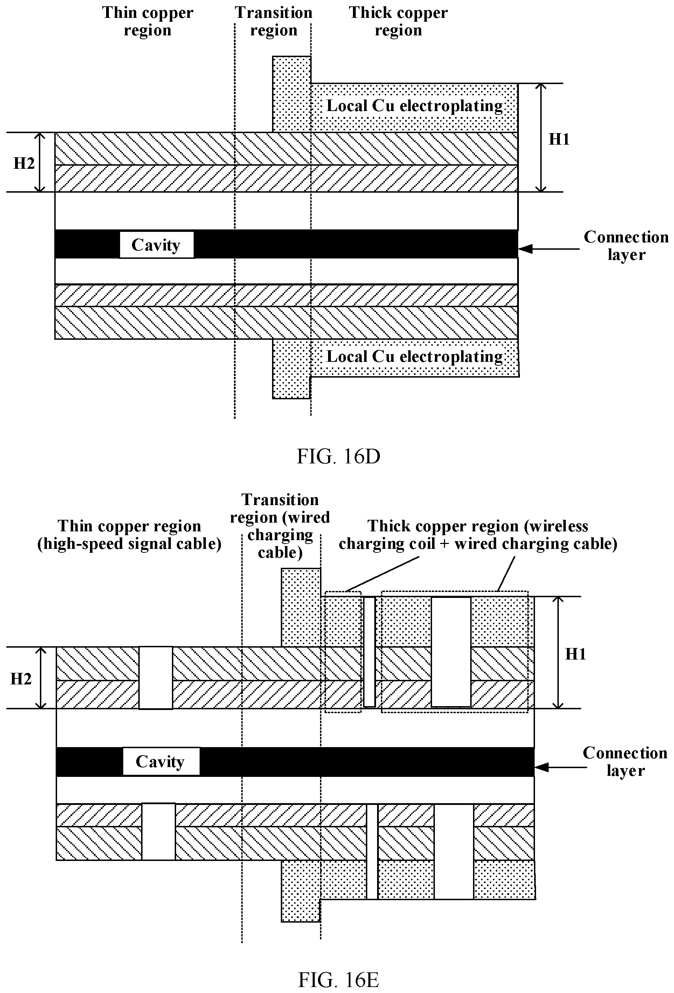

As shown in FIG. 16D, local Cu electroplating is performed on a transition region and a region used to form a wireless charging coil. In this way, a thin copper region with a thin copper layer, a thick copper region with a thick copper layer, and a transition region located between the thin copper region and the thick copper region may be formed.

In some processes, local Cu electroplating may be performed from the transition region shown in FIG. 16D to the thick copper region. Due to an edge effect and high current density, when Cu electroplating is performed on the transition region, a protruding Cu layer shown in FIG. 16D may be prepared in the transition region.

In some implementable processes, a copper thickness H1 of the thick copper region shown in FIG. 16D is 35 µm to 60 µm, and a copper thickness H2 of the thin copper region is 12 µm to 30 µm.

In some examples, as shown in FIG. 16D, the cavity used for the rotating shaft structure to pass through may correspond to a location of the thin copper region. Because the thickness of the thin copper region is small and bending performance is high, the cavity used for the rotating shaft structure to pass through is provided at the location, to facilitate the rotating shaft structure in passing through the cavity.

In some other examples, the cavity used for the rotating shaft structure to pass through may correspond to the thick copper region, or may correspond to the transition region.

As shown in FIG. 16E, a wireless charging coil is obtained by etching the thick copper region, and a high-speed signal cable is obtained by etching the thin copper region.

In some examples, as shown in FIG. 16E, the wireless charging coil and a wired charging cable may be obtained by etching the thick copper region, and the wired charging cable is closer to the transition region. The high-speed signal cable is obtained by etching the thin copper region, and the wired charging cable may also be formed in the transition region.

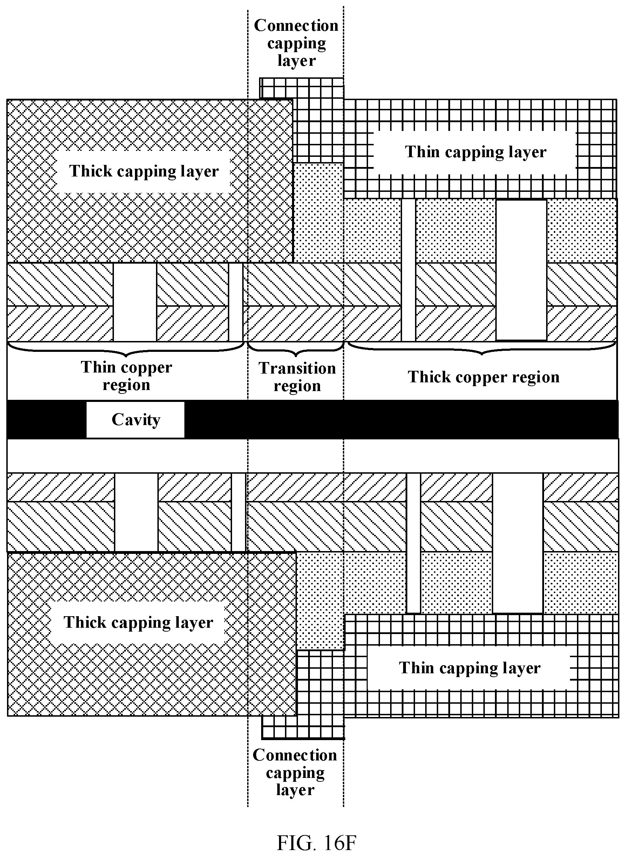

As shown in FIG. 16F, a thick capping layer is disposed on the thin copper region, a thin capping layer is disposed on the thick copper region, and a connection capping layer is disposed on the transition region.

In a process, when the thin copper region is covered with the thick capping layer, the transition region may be covered with the thick capping layer, and when the thick copper region is covered with the thin capping layer, the transition region may be covered with the thin capping layer.

To enable the transition region to be completely covered with the capping layer, the thick capping layer and the thin capping layer may be stacked at some locations of the transition region.

For example, a thick capping layer with a total thickness of about 25 µm to 50 µm may be bonded to the thin copper region, and a thin capping layer with a total thickness of about 10 µm to 25 µm may be bonded to the thick copper region, to reduce a thickness of the thick copper region, so that a surface of the coil module is flat.

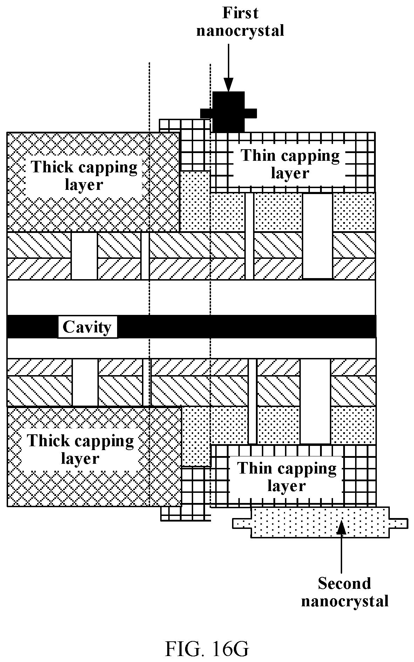

As shown in FIG. 16G, a first nanocrystal and a second nanocrystal are disposed, at least a part of a periphery of the wireless charging coil is covered with the first nanocrystal, and the first nanocrystal extends to be above the transition region. At least a part of the wireless charging coil is covered with the second nanocrystal.

The first nanocrystal and the second nanocrystal in the example of this application have a plurality of structures that can be implemented.

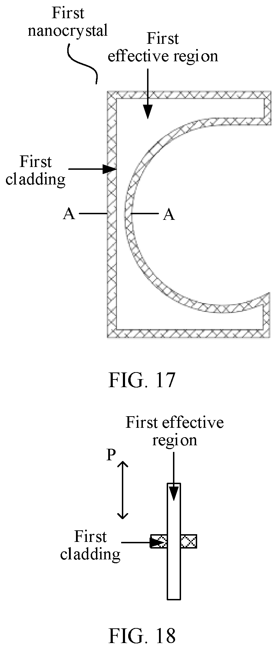

FIG. 17 shows an example of a front view of a first nanocrystal, and FIG. 18 shows an A-A sectional view of FIG. 17. In this example, the first nanocrystal includes a first effective region and a first cladding, and the first cladding is disposed around a periphery of the first effective region. As shown in FIG. 18, a thickness (a size along a P direction) of the first effective region is greater than a thickness (a size along the P direction) of the first cladding.

For example, the thickness of the first effective region is about 90 µm, and the thickness of the first cladding may be less than or equal to 15 µm.

In the example of this application, the nanocrystal is a soft magnetic alloy material, and a part including the soft magnetic alloy material may be referred to as an effective region. In some examples, a surface of the nanocrystal is covered with a cover film, and the cover film extends to a periphery of the effective region, forming a cladding.

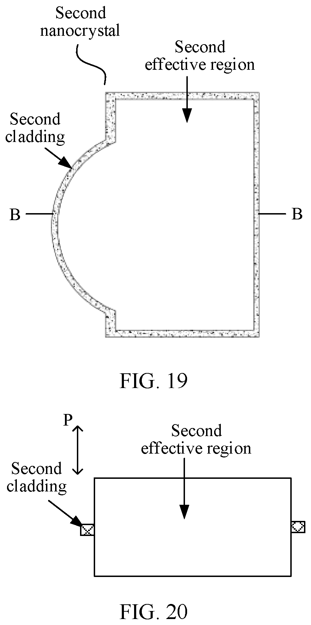

FIG. 19 shows an example of a front view of a second nanocrystal, and FIG. 20 shows a B-B sectional view of FIG. 19. In this example, the second nanocrystal includes a second effective region and a second cladding, and the second cladding is disposed around a periphery of the second effective region. As shown in FIG. 19, a thickness (a size along a P direction) of the second effective region is greater than a thickness (a size along the P direction) of the second cladding.

For example, the thickness of the second effective region is about 90 µm, and the thickness of the second cladding may be less than or equal to 15 µm.

There are a plurality of cases of locations at which the first nanocrystal and the second nanocrystal in the example of this application are disposed. The following provides several examples.

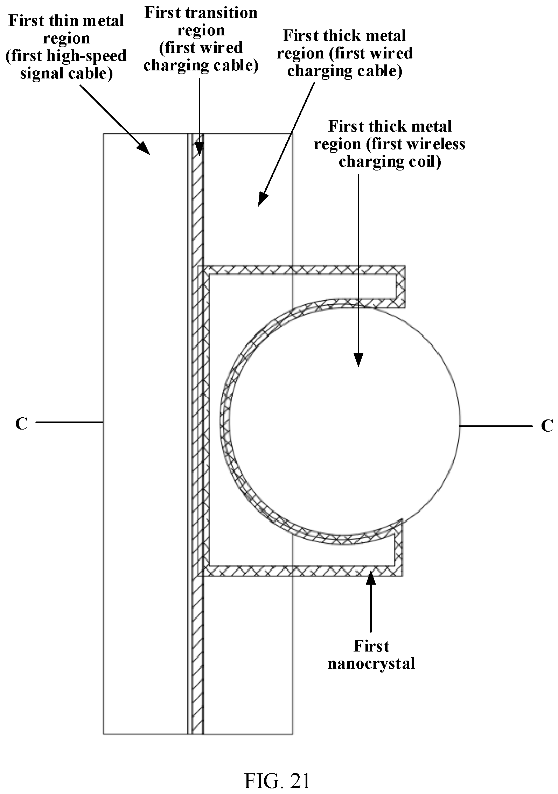

As shown in FIG. 21, in this embodiment, a coil module includes a first thick metal region, a first thin metal region, and a first transition region located in a junction region between the first thin metal region and the first thick metal region. There is a first wireless charging coil in the first thick metal region, there is a first high-speed signal cable in the first thin metal region, and there is a first wired charging cable in the first transition region. Alternatively, it may be understood as that the first wired charging cable is located between the first wireless charging coil and the first high-speed signal cable. The first wired charging cable in the first thick metal region is closer to the first transition region than the first wireless charging coil. A first nanocrystal covers at least a part of the first wired charging cable in the first thick metal region, and extends to be above the first transition region.

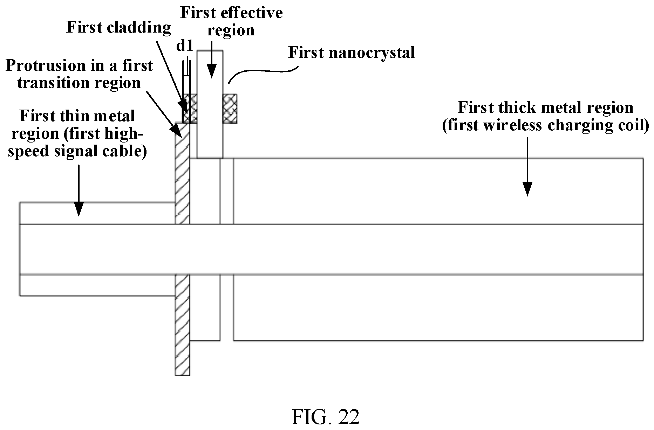

FIG. 22 is a C-C sectional view of FIG. 21. FIG. 22 shows a location relationship between the first nanocrystal and the first transition region. There is a protrusion in the first transition region, the protrusion protrudes relative to a surface of the first thick metal region, and a first cladding of the first nanocrystal may be located above the protrusion of the first transition region.

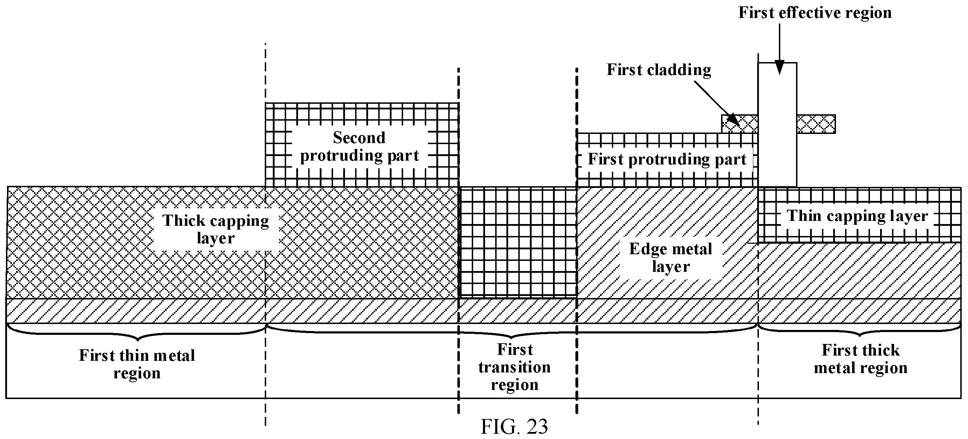

In some examples, as shown in FIG. 23, there is a protruding edge metal layer in the first transition region, so that a first protruding part is formed on a surface of the first transition region, and the first cladding of the first nanocrystal may be bond to the first protruding part.

In other words, in this application, the cladding of the first nanocrystal is bond to the first transition region, and the cladding is bond to the first protruding part that is close to the thick metal region. In this way, the first nanocrystal shields a magnetic field, to avoid interference from the magnetic field to surrounding signals. In addition, in comparison with bonding the effective region to the transition region, a thickness of the entire coil module can be reduced.

As shown in FIG. 22, a size that is of the first cladding located above the protrusion and that is in a first direction is d1, where 0.1 mm ≤ d1 ≤ 0.5 mm, and the first direction is parallel to a width direction of the first cladding.

For example, the size d1 of the first cladding in the first direction may be: a width of the first cladding of the first nanocrystal minus a fitting tolerance of the first nanocrystal. For example, the width of the first cladding of the first nanocrystal is 0.5 mm, and the fitting tolerance of the first nanocrystal is 0.3 mm. For example, d1 = 0.5 - 0.3 = 0.2 mm; or d1 = 0.3 mm, or d1 = 0.1 mm, or d1 = 0.4 mm.

In some examples, the first thin metal region includes the first high-speed signal cable, the first thick metal region includes the first wireless charging coil, and the first transition region is a metal-free region. In this case, a thickness of the first transition region is small, and the first nanocrystal extends to the first transition region. For example, the first nanocrystal may cover the entire first transition region. Alternatively, the first effective region of the first nanocrystal may cover above the first transition region.

In some other examples, the first thin metal region includes the first high-speed signal cable, the first thick metal region includes the first wireless charging coil, and there is a metal layer in the first transition region. For example, the first transition region may include the first wired charging cable. The first nanocrystal may extend to the first transition region. For example, the first nanocrystal may cover the entire first transition region. To avoid partial over-thickness, as shown in FIG. 22, the first nanocrystal may be bond to the protrusion, for example, the first cladding of the first nanocrystal is bond to the protrusion.

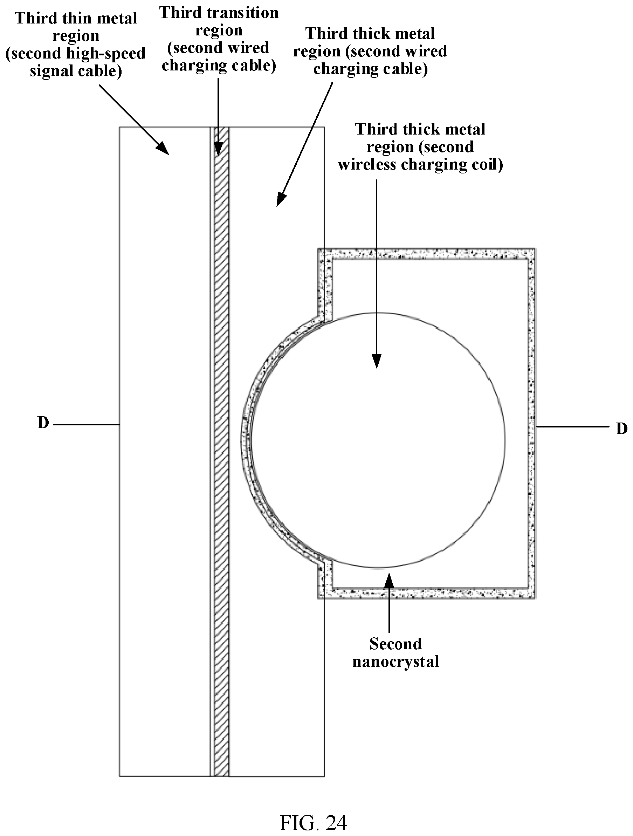

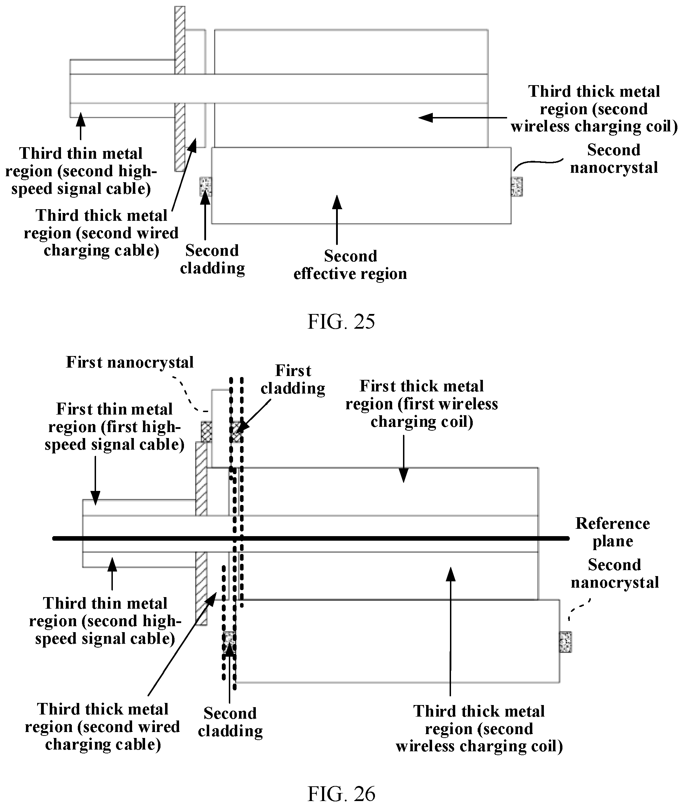

FIG. 24 and FIG. 25 show a location at which a second nanocrystal is disposed, and FIG. 25 is a D-D sectional view of FIG. 24. The second nanocrystal covers at least a part of a second wireless charging coil, and may extend to be above a second wired charging cable in a third thick metal region.

In some optional nanocrystal structures, thicknesses of effective regions of a first nanocrystal and the second nanocrystal are close to 90 µm, and thicknesses of claddings of the first nanocrystal and the second nanocrystal are less than 15 µm. To make a thickness of the entire coil module small, it is not expected that the effective region of the first nanocrystal and the effective region of the second nanocrystal are bond to opposite sides of a metal layer at a same location.

As shown in FIG. 26, for a first nanocrystal, an orthographic projection that is of a first cladding located above a first wireless charging coil and that is on a reference plane is a first projection. For a second nanocrystal, an orthographic projection that is of a second cladding extending to be above a second wired charging cable in a third thick metal region and that is on the reference plane is a second projection. The first projection and the second projection overlap with each other. The reference plane shown in FIG. 26 is parallel to a surface of a substrate.

In the example in FIG. 26, there is a first metal layer, for example, there is a wired charging cable, under a first effective region of the first nanocrystal, and there is a second metal layer, for example, there is a wireless charging coil, under a second effective region of the second nanocrystal. It may be understood as that below the first effective region of the first nanocrystal is a thick metal region, and below the second effective region of the second nanocrystal is also the thick metal region.

An orthographic projection of the first effective region of the first nanocrystal on the reference plane is a third projection, an orthographic projection of the second effective region of the second nanocrystal on the reference plane is a fourth projection, and the third projection and the fourth projection do not overlap.

There is the first metal layer under the first effective region of the first nanocrystal, and the first metal layer does not include a metal-free gap between traces. There is the second metal layer under the second effective region of the second nanocrystal, and the second metal layer does not include a metal-free gap between the traces.

As shown in FIG. 26, for the first nanocrystal and the second nanocrystal that are located on two opposite sides, projections of claddings overlap with each other, and projections of effective regions do not overlap. In this way, the projections of the effective regions of the first nanocrystal and the second nanocrystal do not overlap with each other on a same metal layer, therefore partial over-thickness of a module is not caused, and magnetic leakage can be avoided.

In some structures, there is a gap between the wired charging cable and the wireless charging coil that are located in the thick metal region, and the gap is large. For example, the gap may be greater than or equal to 0.6 mm. In this case, the projection of the first effective region of the first nanocrystal and the projection of the second effective region of the second nanocrystal may overlap at a location of the gap, and a phenomenon of partial over-thickness does not necessarily occur.

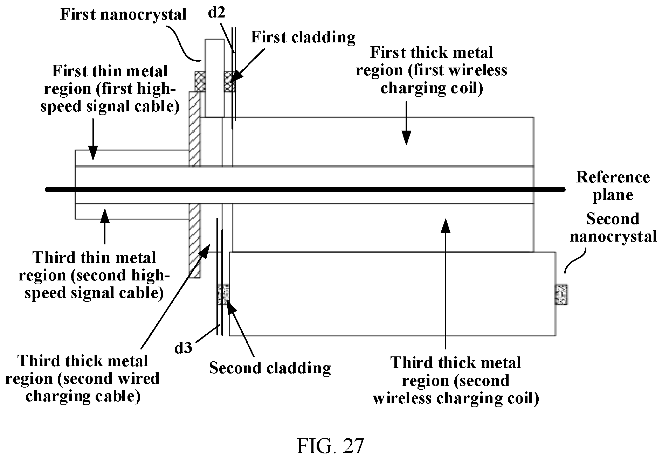

As shown in FIG. 27, for a first nanocrystal, a size that is of a first cladding located above a first wireless charging coil and that is in a first direction is d2, where 0.1 mm ≤ d2 ≤ 0.5 mm, and the first direction is parallel to a width direction of the first cladding.

For example, the size d2 of the first cladding in the first direction may be: a width of the first cladding of the first nanocrystal minus a fitting tolerance of the first nanocrystal. For example, the width of the first cladding of the first nanocrystal is 0.5 mm, and the fitting tolerance of the first nanocrystal is 0.3 mm. For example, d2 = 0.5 - 0.3 = 0.2 mm; or d2 = 0.3 mm, or d2 = 0.1 mm, or d2 = 0.4 mm.

Still refer to FIG. 27. For a second nanocrystal, a size that is of a second cladding located above a second wired charging cable and that is in the first direction is d3, where 0.1 mm ≤ d3 ≤ 0.5 mm, and the first direction is parallel to a width direction of the second cladding.

For example, the size d3 of the second cladding in the first direction may be: a width of the second cladding of the second nanocrystal minus a fitting tolerance of the second nanocrystal. For example, the width of the second cladding of the second nanocrystal is 0.5 mm, and the fitting tolerance of the first nanocrystal is 0.3 mm. For example, d3 = 0.5 - 0.3 = 0.2 mm; or d3 = 0.3 mm, or d3 = 0.1 mm, or d3 = 0.4 mm.

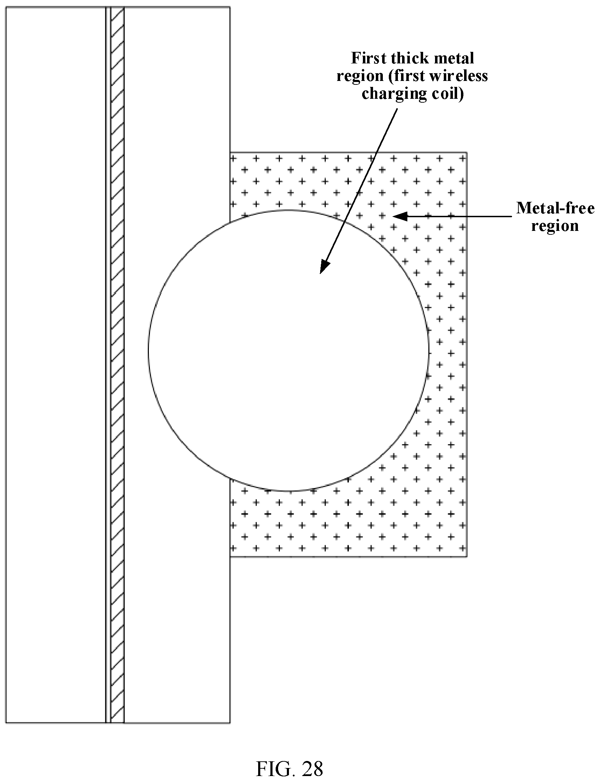

As shown in FIG. 28, a coil module in this example of this application may further include a metal-free region, and the metal-free region may be located around a wireless charging coil. For example, there is a metal-free region around a first wireless charging coil, or there is a metal-free region around a second wireless charging coil.

In some examples, the metal-free region around the first wireless charging coil may be opposite to the metal-free region around the second wireless charging coil.

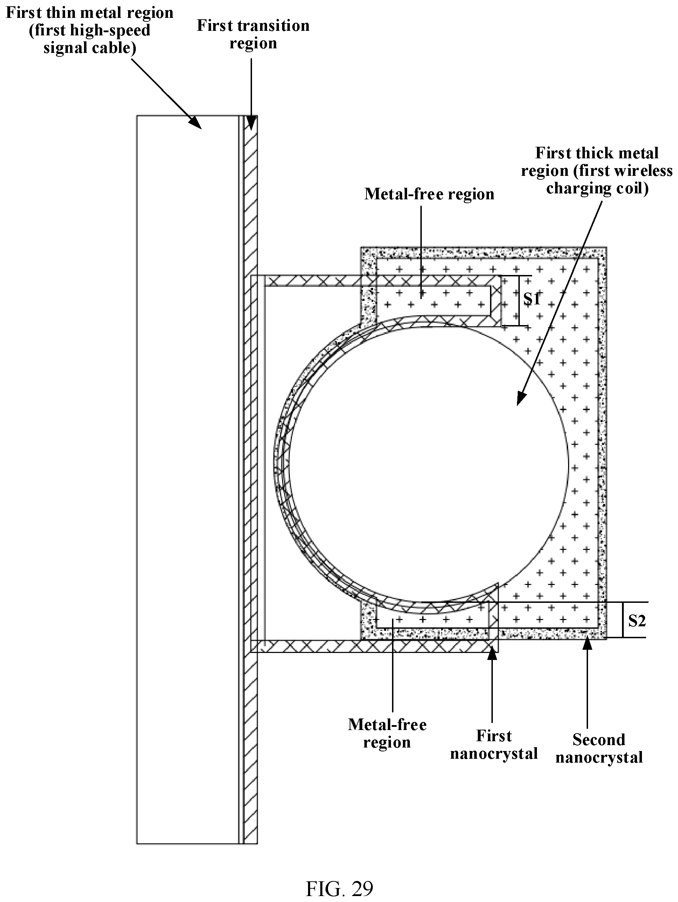

As shown in FIG. 29, an orthographic projection of a first nanocrystal in a metal-free region is a fifth projection, an orthographic projection of a second nanocrystal in the metal-free region is a sixth projection, and the fifth projection and the sixth projection overlap with each other.

In other words, in the metal-free region, the projections of the two nanocrystals that are located on two opposite sides need to overlap with each other, so that magnetic leakage can be avoided.

In some examples, an area of the second nanocrystal is large. For example, in the example in FIG. 29, the second nanocrystal covers a second wireless charging coil at a second metal layer, and may also cover a metal-free region at a periphery of the second wireless charging coil. An overlapping width S of an orthographic projection of the first nanocrystal in the metal-free region and an orthographic projection of the second nanocrystal in the metal-free region may be S1 and S2, and the overlapping width S may be a size in a direction parallel to a width of a first cladding of the first nanocrystal.

A minimum value of the overlapping widths S1 and S2 shall be: 2 * (width of a cladding of a nanocrystal + fitting tolerance of the nanocrystal). For example, widths of claddings of the first nanocrystal and the second nanocrystal are 0.5 mm, and a fitting tolerance of the nanocrystal is 0.3 mm. In this case, a coverage of the first nanocrystal in the metal-free region needs to be at least 0.8 * 2 = 1.6 mm, and a coverage of the second nanocrystal in the metal-free region needs to be at least 0.8 * 2 = 1.6 mm.

As shown in FIG. 29, S1 may be greater than or equal to 1.6 mm, and S2 may be greater than or equal to 1.6 mm. In this way, in a case of a maximum fitting tolerance, a problem of serious magnetic leakage caused by a gap and non-overlapping between the projections of the effective regions of the first nanocrystal and the second nanocrystal can be avoided, wireless charging efficiency can be improved, and so on.

In the descriptions of this specification, the described specific features, structures, materials, or characteristics may be combined in a proper manner in any one or more of the embodiments or examples.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A coil module, comprising:
a substrate;
a first metal layer, a first nanocrystal, and a second nanocrystal; and
a first wireless charging coil and a first high-speed signal cable, wherein
the first metal layer and the first nanocrystal are located on a first side of the substrate, the second nanocrystal is located on a second side of the substrate, and the first side is opposite to the second side;
the first metal layer comprises a first thick metal region, a first thin metal region, and a first transition region located in a junction region between the first thick metal region and the first thin metal region;
the first wireless charging coil is located in the first thick metal region, and the first high-speed signal cable is located in the first thin metal region;
at least a part of a periphery of the first wireless charging coil is covered with the first nanocrystal, and the first nanocrystal extends to be above the first transition region; and
a projection of the second nanocrystal on the first wireless charging coil covers at least a part of the first wireless charging coil.

2. The coil module according to claim 1, wherein the coil module further comprises a first trace; and
the first trace comprises at least one of a ground cable, a power cable, or a low-speed signal cable.

3. The coil module according to claim 2, wherein the first trace is located in the first thick metal region, and the first trace is located between the first wireless charging coil and the first high-speed signal cable; and
the first nanocrystal extends from the periphery of the first wireless charging coil and covers at least a part of the first trace.

4. The coil module according to claim 2 or 3, wherein the first trace is also located in the first transition region.

5. The coil module according to claim 2, wherein the first metal layer further comprises a second thick metal region and a second transition region, and the second transition region is located in a junction region between the second thick metal region and the first thin metal region;
the first trace is located in the second thick metal region; and
the first nanocrystal extends from the periphery of the first wireless charging coil, and covers at least a part of the first transition region and at least a part of the first thin metal region.

6. The coil module according to claim 5, wherein the first trace is also located in the second transition region.

7. The coil module according to claim 2, wherein the first trace is located in the first thick metal region, and the first wireless charging coil is located between the first trace and the first high-speed signal cable; and
the first nanocrystal extends from the periphery of the first wireless charging coil, and covers at least a part of the first transition region, at least a part of the first thin metal region, and at least a part of the first trace.

8. The coil module according to any one of claims 2 to 7, wherein the power cable comprises a wired charging cable.

9. The coil module according to any one of claims 1 to 8, wherein
the first nanocrystal comprises a first effective region and a first cladding, wherein the first cladding is disposed around a periphery of the first effective region;
the first transition region comprises a protrusion, and the protrusion protrudes relative to a surface of the first thick metal region; and
the first cladding is located above the protrusion.

10. The coil module according to claim 9, wherein a size that is of the first cladding located above the protrusion and that is in a first direction is d1, wherein 0.1 mm ≤ d1 ≤ 0.5 mm, and the first direction is parallel to a width direction of the first cladding.

11. The coil module according to claim 9 or 10, wherein the first cladding extends to be above the first wireless charging coil.

12. The coil module according to claim 11, wherein a size that is of the first cladding located above the first wireless charging coil and that is in the first direction is d2, wherein 0.1 mm ≤ d2 ≤ 0.5 mm, and the first direction is parallel to the width direction of the first cladding.

13. The coil module according to claim 11 or 12, wherein
the second nanocrystal comprises a second effective region and a second cladding, wherein the second cladding is disposed around a periphery of the second effective region; and
an orthographic projection that is of the first cladding located above the first wireless charging coil and that is on a reference plane is a first projection, an orthographic projection that is of the second cladding close to the first transition region and that is on the reference plane is a second projection, the first projection and the second projection overlap with each other, and the reference plane is parallel to a surface of the substrate.

14. The coil module according to claim 13, wherein
a second metal layer is further disposed on the second side of the substrate, and the second metal layer comprises a third thick metal region, a third thin metal region, and a third transition region located in a junction region between the third thick metal region and the third thin metal region;
the third thick metal region is opposite to the first thick metal region, the third thin metal region is opposite to the first thin metal region, and the third transition region is opposite to the first transition region;
the coil module further comprises a second wireless charging coil and a second high-speed signal cable;
the second wireless charging coil is located in the third thick metal region, and the second high-speed signal cable is located in the third thin metal region; and
at least a part of the second wireless charging coil is covered with the second nanocrystal.

15. The coil module according to claim 13, wherein the coil module further comprises a second trace;
the second trace comprises at least one of a ground cable, a power cable, or a low-speed signal cable;
the second trace is located in the third thick metal region, and the second trace is located between the second wireless charging coil and the second high-speed signal cable; and
the second cladding extends to be above the second trace.

16. The coil module according to claim 15, wherein a size that is of the second cladding located above the second trace and that is in the first direction is d3, wherein 0.1 mm ≤ d3 ≤ 0.5 mm, and the first direction is parallel to a width direction of the second cladding.

17. The coil module according to any one of claims 14 to 16, wherein
there is the first metal layer under the first effective region, and there is the second metal layer under the second effective region; and
an orthographic projection of the first effective region on the reference plane is a third projection, an orthographic projection of the second effective region on the reference plane is a fourth projection, and the third projection and the fourth projection do not overlap.

18. The coil module according to any one of claims 1 to 17, wherein the first side of the substrate further comprises a metal-free region, and the metal-free region is located around the first wireless charging coil; and
an orthographic projection of the first nanocrystal on the metal-free region is a fifth projection, an orthographic projection of the second nanocrystal on the metal-free region is a sixth projection, and the fifth projection and the sixth projection overlap with each other.

19. The coil module according to claim 18, wherein the first nanocrystal comprises the first effective region and the first cladding, and the first cladding is disposed around the periphery of the first effective region; and
an overlapping width of the fifth projection and the sixth projection in the first direction is S, wherein S > 1.6 mm, and the first direction is parallel to the width direction of the first cladding.

20. The coil module according to any one of claims 1 to 19, wherein the coil module further comprises a thick capping layer, a thin capping layer, and a connection capping layer located in a junction region between the thick capping layer and the thin capping layer; and
the thick capping layer is formed on the first thin metal region, the thin capping layer is formed on the first thick metal region, and the connection capping layer is formed on the first transition region.

21. The coil module according to claim 20, wherein the first transition region comprises an edge metal layer, the edge metal layer protrudes relative to the first thick metal region, and the connection capping layer located on the edge metal layer protrudes to form a first protruding part;
the connection capping layer comprises the thick capping layer and the thin capping layer that are stacked, and the connection capping layer located on the thick capping layer and the thin capping layer that are stacked protrudes to form a second protruding part; and
the first protruding part is closer to the first thick metal region than the second protruding part.

22. The coil module according to claim 21, wherein the first nanocrystal extends to be above the first protruding part.

23. The coil module according to claim 21 or 22, wherein the first protruding part and the second protruding part are spaced apart.

24. The coil module according to any one of claims 21 to 23, wherein the edge metal layer comprises a first edge metal layer and a second edge metal layer, and the second edge metal layer is located on a side that is of the first edge metal layer and that is away from the substrate; and
the first edge metal layer protrudes toward a direction of the first thin metal region relative to the second edge metal layer.

25. The coil module according to any one of claims 1 to 24, wherein the substrate comprises a first substrate and a second substrate, the first substrate and the second substrate are disposed opposite to each other, the first substrate and the second substrate are connected through a connection layer, and the connection layer has a cavity;
the first metal layer and the first nanocrystal are disposed on a side that is of the first substrate and that is away from the second substrate; and
the second nanocrystal is disposed on a side that is of the second substrate and that is away from the first substrate.

26. The coil module according to claim 25, wherein the cavity corresponds to a location of the first thin metal region.

27. An electronic device, comprising:
a processor; and
a coil module, wherein the coil module comprises the coil module according to any one of claims 1 to 26, and the coil module is connected to the processor.

28. The electronic device according to claim 27, wherein the electronic device comprises a bar-type electronic device or comprises a foldable electronic device.

29. The electronic device according to claim 27 or 28, wherein the electronic device comprises the foldable electronic device, and the foldable electronic device comprises a rotating shaft structure;
the substrate comprises the first substrate and the second substrate, the first substrate and the second substrate are disposed opposite to each other, the first substrate and the second substrate are connected through the connection layer, the connection layer has the cavity, and the rotating shaft structure passes through the cavity;
the first metal layer and the first nanocrystal are disposed on the side that is of the first substrate and that is away from the second substrate; and
the second nanocrystal is disposed on the side that is of the second substrate and that is away from the first substrate.
